# EUROPEAN PATENT APPLICATION

(11) **EP 2 450 879 A1**
(43) Date of publication of application: **09.05.2012**
(21) Application number: 11187390.7
(22) Date of filing: 01.11.2011
(51) Int. Cl.: G10L 15/24, G10L 15/26, G10L 17/00, G06F 3/01, G06F 3/038, G06F 3/048

(54) **Information processing apparatus, information processing method, and computer-readable storage medium**

(30) Priority: 09.11.2010 JP 2010250713
(71) Applicant: Sony Corporation, Tokyo 108-0075 (JP)
(72) Inventor: Maeda, Yoshinori, Minato-ku, Tokyo 108-0075 (JP)
(74) Representative: Malden, Nicholas

(57) **Abstract**

A method is provided for generating a command to perform a predetermined operation. The method comprises acquiring at least a first input and a second input from among a plurality of inputs. The method further comprises determining first semantic information associated with the first input. The method also comprises determining second semantic information associated with the second input. The method also comprises generating a command to perform a predetermined operation, based a combination of the determined first and second semantic information.

## Description

The present disclosure contains subject matter related to that disclosed in Japanese Priority Patent Application JP 2010-250713 filed in the Japan Patent Office on November 9, 2010.

The present disclosure relates to an information processing apparatus, computer-readable medium, and method for command generation.

In order to operate various kinds of devices, there have been used a keyboard, a mouse, a remote controller for a domestic electric appliance such as a TV, or the like as an input device.

However, there are some cases where the use of the input device of the past for operating a target device is not necessarily intuitive and easily understandable for a user. Further, in the case where the user loses the input device, there is a risk that it becomes difficult to operate the target device.

Accordingly, there is disclosed technology related to a user interface, which enables the target device to be operated by an input action using a voice, a gesture, or the like that is intuitive and easily understandable. For example, in JP 2003-334389A, there is disclosed a technology which recognizes a gesture from a moving image obtained by shooting an input action of a user and generates a control command based on the recognition result. Further, in JP 2004-192653A, there is disclosed a technology which uses two or more types of input actions from among a voice, a gesture, and the like, executes processing based on input information acquired by one input action, and performs control (start, pause, and the like) with respect to the execution of the processing based on input information acquired by another input action.

However, in the case of the input action using a voice, a gesture, or the like, the user has to memorize a correspondence relationship between a command given to a target device and each voice, each gesture, or the like. In particular, in the case of using two or more types of input actions as mentioned in JP 2004-192653A, it is extremely difficult to memorize the correspondence relationship between each command and an input action.

Therefore, it is desirable to provide a novel and improved information processing apparatus, information processing method, and computer-readable storage medium capable of facilitating an input action for causing a target device to execute a desired operation using two or more types of input actions.

Accordingly, in one embodiment of the present disclosure there is provided an apparatus for generating a command to perform a predetermined operation. The apparatus comprises an acquisition unit which acquires a first input and a second input from among a plurality of inputs. The apparatus further comprises a recognition unit which determines first semantic information associated with the first input, and determines second semantic information associated with the second input. The apparatus also comprises a processing unit which generates a command to perform a predetermined operation, based a combination of the determined first and second semantic information.

In another embodiment of the present disclosure, there is provided a method for generating a command to perform a predetermined operation. The method comprises acquiring at least a first input and a second input from among a plurality of inputs. The method further comprises determining first semantic information associated with the first input. The method also comprises determining second semantic information associated with the second input. The method also comprises generating a command to perform a predetermined operation, based a combination of the determined first and second semantic information.

In another embodiment of the present disclosure, there is provided a tangibly-embodied non-transitory computer-readable storage medium storing instructions which, when executed by a processor, cause a computer to perform a method for generating a command to perform a predetermined operation. The method comprises acquiring at least a first input and a second input from among a plurality of inputs. The method further comprises determining first semantic information associated with the first input. The method also comprises determining second semantic information associated with the second input. The method also comprises generating a command to perform a predetermined operation, based a combination of the determined first and second semantic information.

According to the embodiments described above, there are provided an information processing apparatus, information processing method, and computer-readable storage medium, facilitating an input action for causing a target device to execute a desired operation using two or more types of input actions.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
FIG. 1 is a block diagram showing a functional configuration of an information processing apparatus according to a first embodiment of the present disclosure;
FIG. 2 is a diagram showing an example of a voice recognition dictionary stored in a voice storage section;
FIG. 3 is a first diagram showing an example of a gesture recognition dictionary stored in a gesture storage section;
FIG. 4 is a second diagram showing an example of the gesture recognition dictionary stored in the gesture storage section;
FIG. 5 is a first diagram showing an example of a command dictionary stored in a command storage section;
FIG. 6 is a first diagram showing an example of an execution result obtained by an operation in accordance with a command;
FIG. 7 is a second diagram showing an example of the execution result obtained by the operation in accordance with the command;
FIG. 8 is a diagram showing an example of a relationship between input information and semantic information;
FIG. 9 is a flowchart showing command generation processing according to the first embodiment;
FIG. 10 is a block diagram showing a functional configuration of an information processing apparatus according to a second embodiment of the present disclosure;
FIG. 11 is a first diagram showing an example of a change amount conversion dictionary stored in a change amount storage section;
FIG. 12 is a second diagram showing an example of the change amount conversion dictionary stored in the change amount storage section;
FIG. 13 is a second diagram showing an example of the command dictionary stored in the command storage section;
FIG. 14 is a flowchart showing command generation processing according to the second embodiment;
FIG. 15 is a block diagram showing a functional configuration of an information processing apparatus according to a third embodiment of the present disclosure;
FIG. 16 is a first diagram showing an example of the voice recognition dictionary and the gesture recognition dictionary for each user ID;
FIG. 17 is a second diagram showing an example of the voice recognition dictionary and the gesture recognition dictionary for each user ID;
FIG. 18 is a flowchart showing command generation processing according to the third embodiment;
FIG. 19 is a block diagram showing a functional configuration of an information processing apparatus according to a fourth embodiment of the present disclosure;
FIG. 20 is a diagram showing an example of information stored in an operation content storage section;
FIG. 21 is a diagram showing an example of information stored in a frequency information storage section;
FIG. 22 is a third diagram showing an example of the command dictionary stored in the command storage section;
FIG. 23 is a diagram showing an example of a display screen which displays a candidate for a command to be an omission target;
FIG. 24 is a diagram showing an example of a display screen which displays a confirmation display of whether or not to execute a command;
FIG. 25 is a flowchart showing a command generation processing according to a fourth embodiment;
FIG. 26 is a block diagram showing a functional configuration of an information processing apparatus according to a fifth embodiment of the present disclosure;
FIG. 27 is a first diagram showing an example of a display screen which displays a candidate for an input action;
FIG. 28 is a second diagram showing an example of the display screen which displays the candidate for the input action;
FIG. 29 is a first diagram showing an example of a display screen which displays a state of a target of operation related to a target device;
FIG. 30 is a second diagram showing an example of the display screen which displays the state of the target of operation related to the target device;
FIG. 31 is a flowchart showing a command generation processing according to a fifth embodiment; and
FIG. 32 is a block diagram showing an example of a hardware configuration of the information processing apparatus according to each embodiment of the present disclosure.

In the following, embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

It is to be noted that the description is set forth below in accordance with the following order.
1. First embodiment
   1-1. Configuration of information processing apparatus
   1-2. Flow of processing
2. Second embodiment
   2-1. Configuration of information processing apparatus
   2-2. Flow of processing
3. Third embodiment
   3-1. Configuration of information processing apparatus
   3-2. Flow of processing
4. Fourth embodiment
   4-1. Configuration of information processing apparatus
   4-2. Flow of processing
5. Fifth embodiment
   5-1. Configuration of information processing apparatus
   5-2. Flow of processing
6. Hardware configuration of information processing apparatus according to each embodiment of the present disclosure
7. Summary

In each of the embodiments described below, two or more types of input actions are performed as the input actions to be performed to a target device that the user wants to operate. Further, as two or more types of input information acquired from the two or more types of input actions, there are used voice input information which is acquired by an input action using a voice and gesture input information which is acquired by an input action using a motion or a state of a part of or entire body. Note that the voice input information and the gesture input information are examples of the input information acquired by the two or more types of input actions which are acquired by the input action performed by the user.

Further, the information processing apparatus according to each embodiment generates a command for causing the target device to operate based on the input information. Examples of the information processing apparatus may include consumer electronics devices such as a TV, a projector, a DVD recorder, a Blu-ray recorder, a music player, a game device, an air conditioner, a washing machine, and a refrigerator, information processing devices such as a PC (Personal Computer), a printer, a scanner, a smartphone, and a personal digital assistant, and other devices such as lighting equipment and a water boiler. Further, the information processing apparatus may be a peripheral device which is connected to those devices.

### <1. First embodiment>

### [1-1. Configuration of information processing apparatus]

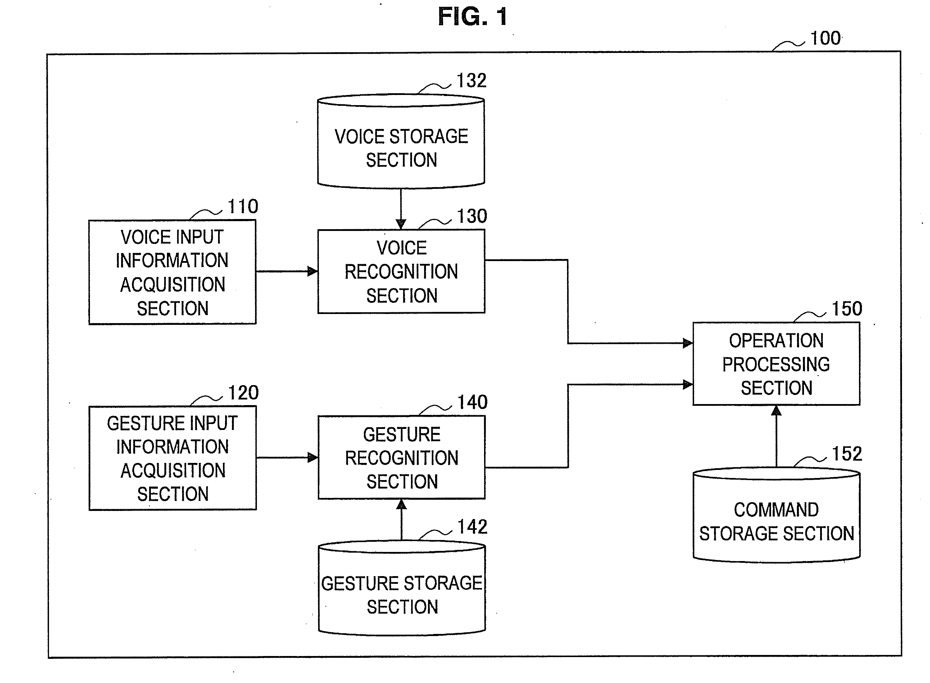

Hereinafter, with reference to FIGS. 1 to 8, there will be described a configuration of an information processing apparatus according to a first embodiment of the present disclosure.

FIG. 1 is a block diagram showing a functional configuration of an information processing apparatus 100 according to the first embodiment of the present disclosure. Referring to FIG. 1, the information processing apparatus 100 includes a voice input information acquisition section 110 (i.e., an acquisition unit), a gesture input information acquisition section 120 (i.e., and acquisition unit), a voice recognition section 130 (i.e., a recognition unit), a voice storage section 132 (i.e., a storage unit), a gesture recognition section 140 (i.e, a recognition unit), a gesture storage section 142 (i.e., a storage unit), an operation processing section 150 (i.e., a processing unit), and a command storage section 152. Note that an input recognition section is described as a combination of the voice recognition section 130 and the gesture recognition section 140. As used herein the term "unit" or "section" may be a software module, a hardware module, or a combination of a software module and a hardware module. Such hardware and software modules may be embodied in discrete circuitry, an integrated circuit, or as instructions executed by a processor.

The voice input information acquisition section 110 acquires voice input information by an input action using a voice performed by a user. For example, when the user performs the input action using a voice, the voice input information acquisition section 110 extracts a voice waveform signal from a collected voice and performs an analog/digital conversion of the voice waveform signal, and thereby acquiring digitized voice information as the voice input information. Further, the voice input information acquisition section 110 may further extract a feature quantity related to the voice from the digitalized voice information and may also acquire the feature quantity as the voice input information. After that, the voice input information acquisition section 110 outputs the acquired voice input information to the voice recognition section 130. Note that an external device connected to the information processing apparatus 100 may acquire the voice input information from the collected voice, and the voice input information acquisition section 110 may receive, from the external device, the voice input information in the form of information of any one of the voice itself, the digitalized voice information, and the feature quantity.

The gesture input information acquisition section 120 acquires gesture input information by an input action using the motion or the state of a part of or entire body performed by the user. For example, when the user performs the input action using a motion of his/her hand, the gesture input information acquisition section 120 shoots the motion of the user's hand by a camera attached to the information processing apparatus 100, and thereby acquiring digitized moving image information as the gesture input information. Further, the gesture input information acquisition section 120 may also acquire the feature quantity related to the motion of the hand extracted from the digitized moving image information as the gesture input information. After that, the gesture input information acquisition section 120 outputs the acquired gesture input information to the gesture recognition section 140. Note that the input action is not limited to the motion of the hand, and may be a motion of the entire body, or of another part of the body such as a head, fingers, a face (expression), or eyes (line of sight). Further, the input action is not limited to the dynamic motion of a part of or entire body, and may be a static state of a part of or entire body. Further, the gesture input information is not limited to the moving image information, and may also be still image information and other signal information obtained by a sensor or the like. Further, the external device connected to the information processing apparatus 100 may acquire the gesture input information, and the gesture input information acquisition section 120 may receive, from the external device, the gesture input information in the form of a digitalized moving image, the extracted feature quantity, or the like.

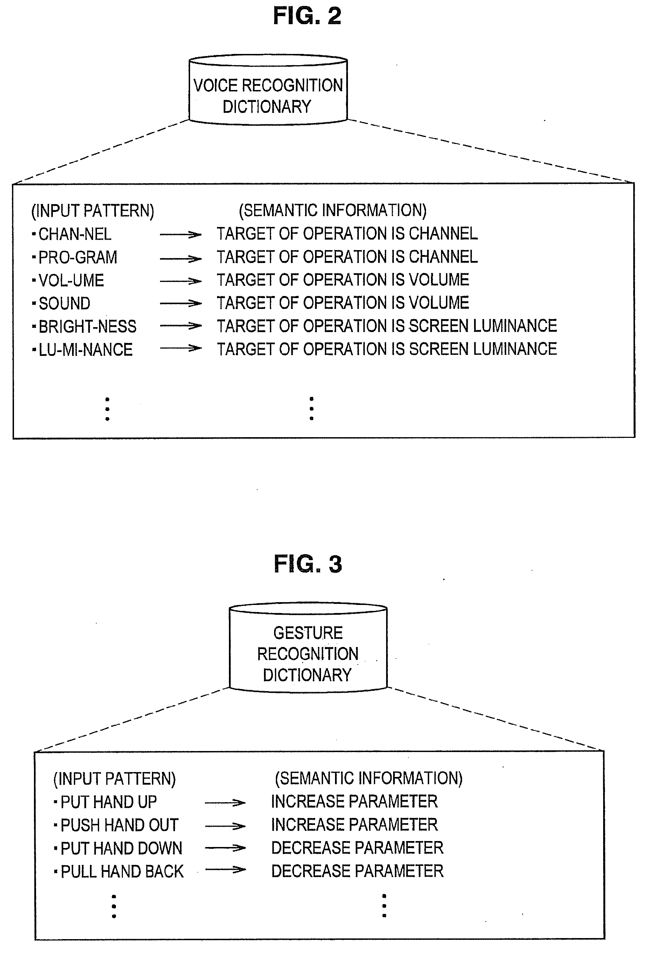

The voice storage section 132 stores an input pattern which is set in advance and semantic information which is associated with the input pattern as a voice recognition dictionary. Here, the input pattern represents information obtained by modeling in advance an input action using a voice, for example. Further, the semantic information represents information indicating the meaning of the input action. FIG. 2 shows an example of the voice recognition dictionary stored in the voice storage section 132. Referring to FIG. 2, in the voice recognition dictionary, there are stored "chan-nel", "vol-ume", and the like as input patterns. The input pattern is stored in a form that is capable of being compared with the voice input information, such as the digitalized voice information and the feature quantity related to the voice. Further, in the voice recognition dictionary, the following are stored as the semantic information, for example: semantic information "target of operation is channel" associated with the input pattern "chan-nel"; and semantic information "target of operation is volume" associated with the input pattern "vol-ume".

The voice recognition section 130 recognizes, from the voice input information acquired by the input action using a voice, the semantic information indicated by the input action using a voice. For example, the voice recognition section 130 specifies an input pattern corresponding to the voice input information from among the input patterns, and extracts the semantic information associated with the input pattern.

When the voice input information is input by the voice input information acquisition section 110, the voice recognition section 130 acquires the input pattern from the voice storage section 132. Next, the voice recognition section 130 calculates a score representing the degree of matching between the voice input information and each input pattern, for example, and specifies the input pattern having the largest score. The calculation of the score obtained by the comparison between the voice input information and each input pattern may be executed using technology in the past related to the known voice recognition which has been used heretofore. Next, the voice recognition section 130 extracts the semantic information associated with the specified input pattern from the voice storage section 132. In this manner, the voice recognition section 130 recognizes the semantic information indicated by the input action using a voice from the input voice input information. Finally, the voice recognition section 130 outputs the recognized semantic information to the operation processing section 150.

For example, the voice input information acquired by the voice "vol-ume" is input to the voice recognition section 130. Referring to FIG. 2, for example, the voice recognition section 130 calculates the score (not shown) between the voice input information and each input pattern, and, using the result thereof, specifies "vol-ume" that is the input pattern having the largest score. Accordingly, the voice recognition section 130 extracts "target of operation is volume", which is the semantic information associated with "vol-ume", as the semantic information.

The gesture storage section 142 stores an input pattern obtained by modeling in advance the input action using the motion or the state of a part of or entire body and semantic information which is associated with the input pattern as a gesture recognition dictionary. FIG. 3 shows an example of the gesture recognition dictionary stored in the gesture storage section 142. Referring to FIG. 3, in the gesture recognition dictionary, there are stored "put hand up", "put hand down", and the like as input patterns. The input pattern is stored in a form that is capable of being compared with the gesture input information, such as the moving image related to the motion of the hand and the feature quantity related to the motion of the hand. Further, in the gesture recognition dictionary, the following are stored, for example: semantic information "increase parameter" associated with the input pattern "put hand up"; and semantic information "decrease parameter" associated with the input pattern "put hand down".

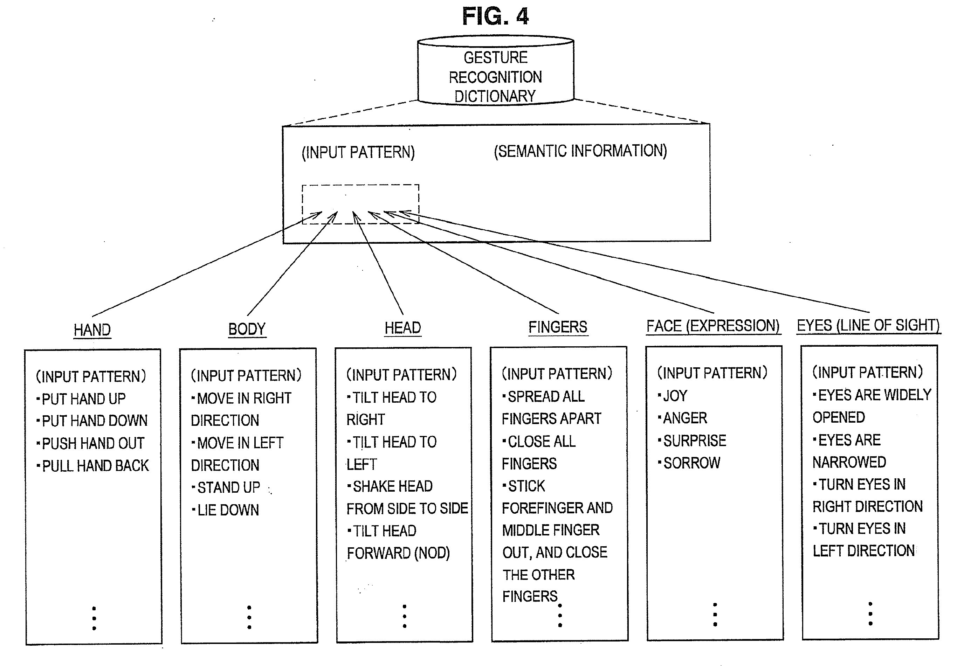

FIG. 4 shows another example of the gesture recognition dictionary stored in the gesture storage section 142. In the case where there is performed not the input action using the motion or the state of the hand, but the input action using the motion or the state of another part of the body, the gesture storage section 142 may store input patterns exemplified in FIG. 4 instead of the input patterns exemplified in FIG. 3. For example, in the gesture recognition dictionary, there may be stored "spread all fingers apart", "close all fingers", and the like as input patterns.

The gesture recognition section 140 recognizes, from the gesture input information acquired by an input action using the motion or the state of a part of or entire body, the semantic information indicated by the input action using the motion or the state of a part of or entire body. For example, the gesture recognition section 140 specifies an input pattern corresponding to the gesture input information from among the input patterns, and extracts the semantic information associated with the input pattern.

When the gesture input information is input by the gesture input information acquisition section 120, the gesture recognition section 140 acquires the input pattern from the gesture storage section 142. Next, the gesture recognition section 140 calculates a score representing the degree of matching between the gesture input information and each input pattern, for example, and specifies the input pattern having the largest score. The calculation of the score obtained by the comparison between the gesture input information and each input pattern may be executed using technology in the past related to the known gesture recognition which has been used heretofore. Next, the gesture recognition section 140 extracts the semantic information associated with the specified input pattern from the gesture storage section 142. In this manner, the gesture recognition section 140 recognizes the semantic information indicated by the input action using the motion or the state of a part of or entire body from the input gesture input information. Finally, the gesture recognition section 140 outputs the recognized semantic information to the operation processing section 150.

For example, the gesture input information acquired by the operation of putting the hand up is input to the gesture recognition section 140. Referring to FIG. 3, for example, the gesture recognition section 140 calculates the score between the gesture input information and each input pattern, and, using the result thereof, specifies "put hand up" that is the input pattern having the largest score. Accordingly, the gesture recognition section 140 extracts "increase parameter", which is the semantic information associated with "put hand up", as the semantic information.

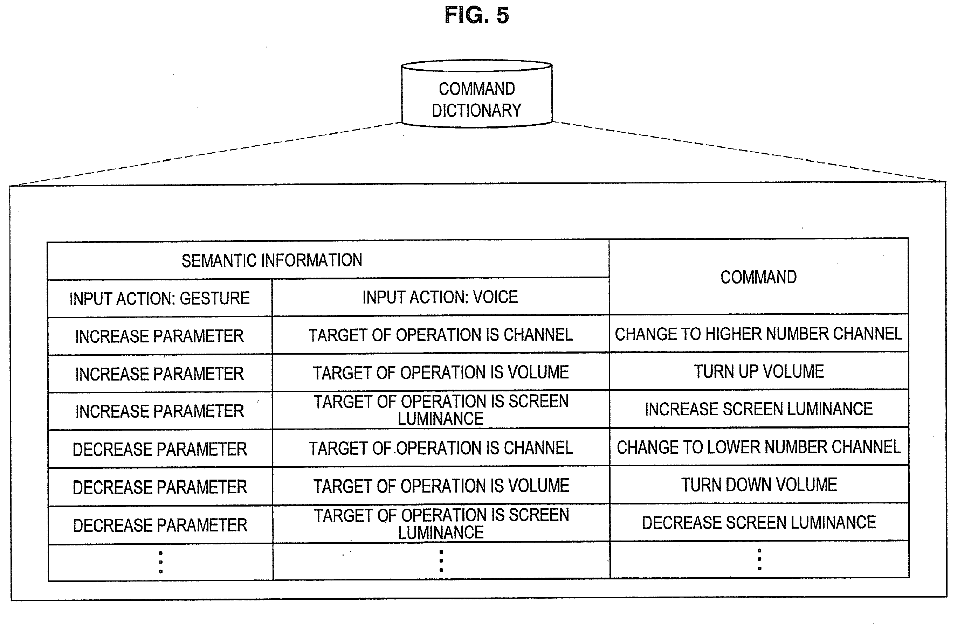

The command storage section 152 stores a command for causing the target device to which the user performs the input action to execute a predetermined operation and a combination of two or more types of semantic information each corresponding to the command, as a command dictionary. FIG. 5 shows an example of the command dictionary stored in the command storage section 152. Referring to FIG. 5, in the command dictionary, there are stored commands such as "change to higher number channel" and "turn up volume". The command is stored in a data format that is readable by the target device, for example. Further, in the command dictionary, there are stored "increase parameter", "target of operation is channel", and the like, which correspond to the command "change to higher number channel", as a combination of pieces of semantic information.

The operation processing section 150 combines two or more types of semantic information, thereby generating a command for causing the target device to execute the predetermined operation, based on a combination of the two or more types of semantic information. The pieces of semantic information used here are the following two types of semantic information: the semantic information recognized by the voice recognition section 130; and the semantic information recognized by the gesture recognition section 140. When receiving the input of the semantic information from the voice recognition section 130 and the gesture recognition section 140, the operation processing section 150 extracts the command corresponding to the combination of those pieces of semantic information from the command storage section 152. The extracted command is a command for causing the target device to execute the predetermined operation. In this manner, the operation processing section 150 generates the command for causing the target device to execute the predetermined operation.

The operation processing section 150 causes the target device to execute, via an executing unit, the predetermined operation in accordance with the generated command. Further, the operation processing section 150 performs control such that result information showing a result obtained by executing the predetermined operation in accordance with the generated command is displayed on a display screen of the target device or another device. Here, the other device represents a device that is directly or indirectly connected to the target device, for example.

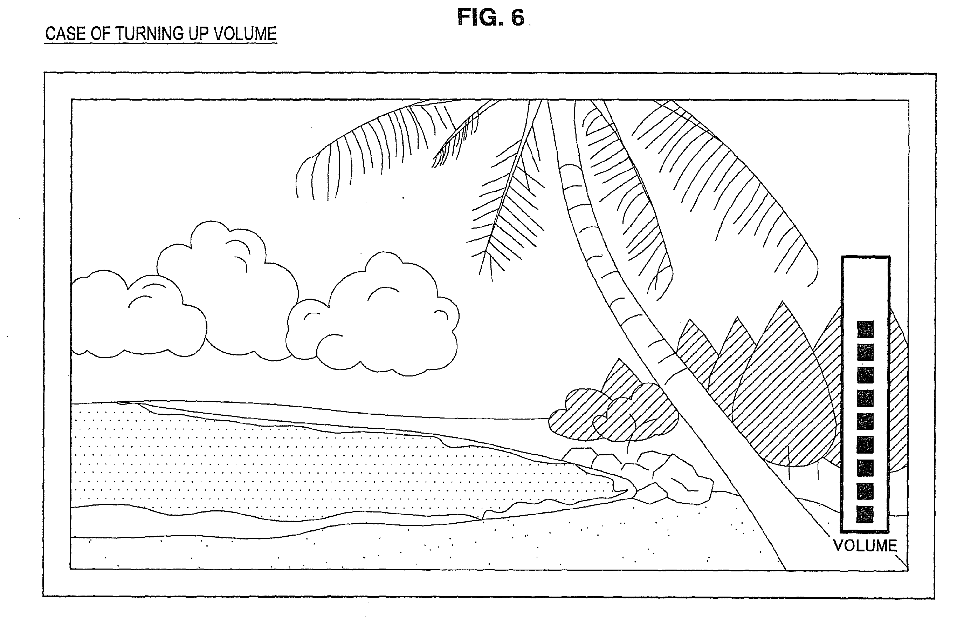

For example, to the operation processing section 150, the semantic information "target of operation is volume" is input from the voice recognition section 130 for specifying a target for a predetermined operation, and the semantic information "increase parameter" is input from the gesture recognition section 140 to specify an execution amount for the predetermined operation. Referring to FIG. 5, the operation processing section 150 generates the command "turn up volume", which corresponds to the combination of the semantic information "target of operation is volume" and the semantic information "increase parameter". Then, in accordance with the generated command "turn up volume", the operation processing section 150 causes the target device to execute the operation "turn up volume". FIG. 6 shows an example of an execution result of an operation performed in accordance with a command. When the operation "turn up volume" is executed as described above, the operation processing section 150 performs control such that, as shown in FIG. 6, the raised volume as the result information is displayed at the bottom right, for example, of the display screen of the target device or the other device.

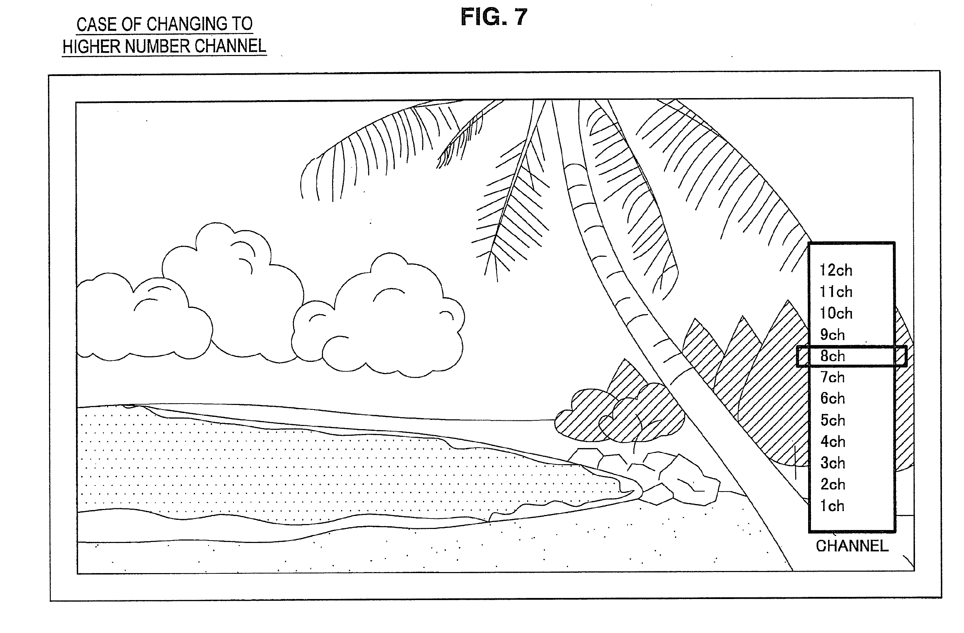

Further, for example, to the operation processing section 150, the semantic information "target of operation is channel" is input from the voice recognition section 130, and the semantic information "increase parameter" is input from the gesture recognition section 140. Referring to FIG. 5, the operation processing section 150 generates the command "change to higher number channel", which corresponds to the combination of the semantic information "target of operation is channel" and the semantic information "increase parameter". Then, in accordance with the generated command "change to higher number channel", the operation processing section 150 causes the target device to execute the operation "change to higher number channel". FIG. 7 shows an example of an execution result of an operation performed in accordance with a command. When the operation "change to higher number channel" is executed as described above, the operation processing section 150 performs control such that, as shown in FIG. 7, the higher number channel that has been changed to as the result information is displayed at the bottom right, for example, of the display screen of the target device or the other device.

Note that, the target device which the operation processing section 150 causes to execute the operation may be at least one of the information processing apparatus 100 and a device connected to the information processing device 100. For example, the target device may be a TV, and the TV itself may be the information processing apparatus 100. Further, for example, the target device may be an air conditioner, and the information processing apparatus 100 may be a peripheral device connected to the air conditioner. Still further, for example, the target devices may be a PC, a printer, and a scanner, and the information processing apparatus 100 may be a peripheral device connected to the PC, the printer, and the scanner.

Heretofore, each of the following sections included in the information processing apparatus 100 have been described: the voice input information acquisition section 110, the gesture input information acquisition section 120, the voice recognition section 130, the voice storage section 132, the gesture recognition section 140, the gesture storage section 142, the operation processing section 150, and the command storage section 152. Here, in addition thereto, there will be described a matter common to the voice recognition section 130 and the gesture recognition section 140, and after that, there will be described a matter common to the voice storage section 132 and the gesture storage section 142.

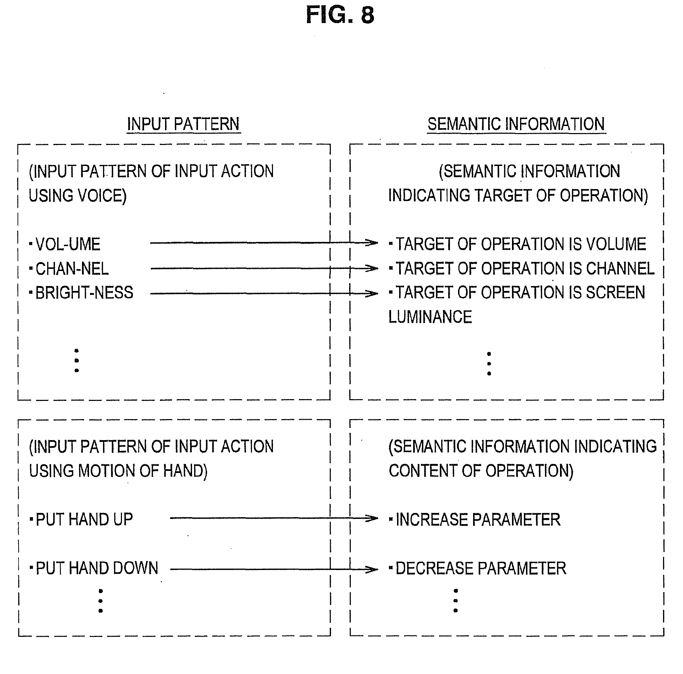

Further, in the present embodiment, the voice recognition section 130 recognizes the semantic information indicating the target of the predetermined operation from the voice input information, and the gesture recognition section 140 recognizes the semantic information indicating the content of the predetermined operation from the gesture input information. With reference to FIG. 8, which shows an example of a relationship between an input pattern corresponding to input information and semantic information, the relationship will be described. As shown in FIG. 8, for example, in the case where the input pattern "vol-ume" is specified from the voice input information, the semantic information "target of operation is volume" is recognized. Further, in the case where the input pattern "chan-nel" is specified from the voice input information, the semantic information "target of operation is channel" is recognized. In this manner, the semantic information indicating the target of the operation is recognized from the voice input information. Further, for example, in the case where the input pattern "put hand up" is specified from the gesture input information, the semantic information "increase parameter" is recognized. For example, in the case where the input pattern "put hand down" is specified from the gesture input information, the semantic information "decrease parameter" is recognized. In this manner, from each piece of input information, it is not that the randomly set semantic information is recognized, it is that the semantic information indicating the content of the operation and the semantic information indicating the target of the operation are recognized. In this way, since it is easy for the user to assume the semantic information that each input action represents, the user may remember the input action more easily.

In the voice storage section 132 and in the gesture storage section 142, as shown in FIG. 2 and FIG. 3, an identical piece of semantic information may be associated with a plurality of input patterns. Referring to FIG. 2, for example, the identical piece of semantic information "target is channel" is associated with two input patterns, "chan-nel" and "pro-gram". Further, referring to FIG. 3, for example, the identical piece of semantic information "increase parameter" is associated with two input patterns, "put hand up" and "push hand out". In this case, it is not necessary that the user remember input actions in detail in order to cause a device to recognize specific semantic information. The user is only to remember an input action that can be easily remembered from among input actions indicating the specific semantic information. Alternatively, the user may learn some input actions indicating the specific semantic information, and may use the one the user can remember at the time of performing the input action. Accordingly, the number of input actions that the user necessarily has to remember may be decreased. Note that the input pattern and the semantic information may be associated with each other on a one-to-one basis.

### [1-2. Flow of processing]

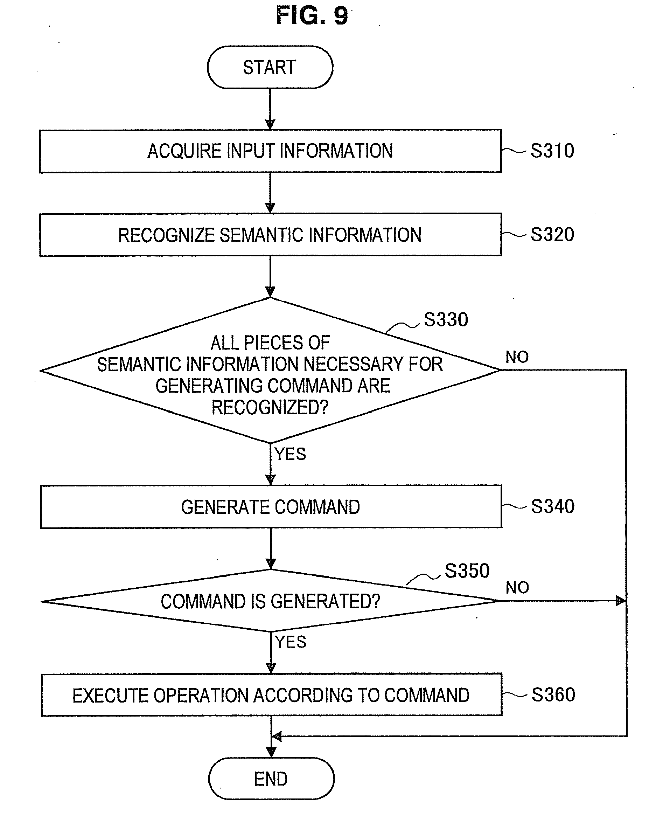

Hereinafter, with reference to FIG. 9, there will be described command generation processing according to the first embodiment of the present disclosure. FIG. 9 is a flowchart showing the command generation processing according to the first embodiment.

Referring to FIG. 9, first, in Step S310, the voice input information acquisition section 110 acquires voice input information based on an input action using a voice performed by a user. Further, the gesture input information acquisition section 120 acquires gesture input information based on an input action using a motion or a state of a part of or entire body of the user.

Next, in Step S320, the voice recognition section 130 recognizes the semantic information indicated by the input action using a voice from the voice input information. Further, the gesture recognition section 140 recognizes the semantic information indicated by the input action using the motion or the state of a part of or entire body from the gesture input information.

In Step S330, the operation processing section 150 determines whether all pieces of semantic information which are necessary for generating a command are recognized by and input from the voice recognition section 130 and the gesture recognition section 140. To be specific, for example, if all pieces of necessary semantic information are not input within a predetermined time period, the operation processing section 150 terminates the processing. On the other hand, if all pieces of semantic information which are necessary for generating a command are input, the operation processing section 150 determines that all pieces of semantic information which are necessary for generating a command are recognized, and proceeds to Step S340. Further, for example, the operation processing section 150 confirms presence/absence of semantic information every predetermined time, and, if there is an input of only one of the pieces of semantic information, the operation processing section 150 may confirm presence/absence of another piece of semantic information after the elapse of the predetermined time. According to the result, if there is no input of the other semantic information, the operation processing section 150 determines that any one of the pieces of semantic information which are necessary for generating a command is not recognized, and terminates the processing. If there is an input of the other semantic information, the operation processing section 150 determines that all pieces of semantic information which are necessary for generating a command are recognized, and proceeds to Step S340.

Next, in Step S340, the operation processing section 150 generates a command for causing a target device to execute a predetermined operation by combining two or more types of semantic information. In the present embodiment, the operation processing section 150 generates the command in the case where there is a command that can be generated by combining the recognized pieces of semantic information, and does not generate the command in the case where there is no command that can be generated by combining the recognized pieces of semantic information.

In Step S350, the operation processing section 150 determines whether the command is generated. Here, in the case where a command is generated, the processing proceeds to Step S360. On the other hand, in the case where the command is not generated, the processing is terminated.

Finally, in Step S360, the operation processing section 150 causes the target device to execute the predetermined operation in accordance with the generated command. Further, the operation processing section 150 performs control such that result information showing a result obtained by executing the predetermined operation in accordance with the generated command is displayed on a display screen of the target device or another device.

The above is the flow of the command generation processing according to the first embodiment of the present disclosure. Note that the command generation processing is executed at the time of activating the information processing apparatus, and after that, may be executed repeatedly at the end of the command generation processing. Alternatively, the command generation processing may be executed repeatedly at predetermined time intervals, for example.

### <2. Second embodiment>

An information processing apparatus according to a second embodiment of the present disclosure is further added with a function of changing an execution amount of operation that the target device is caused to execute based on the input action, to the function that the information processing apparatus according to the first embodiment of the present disclosure has.

### [2-1. Configuration of information processing apparatus]

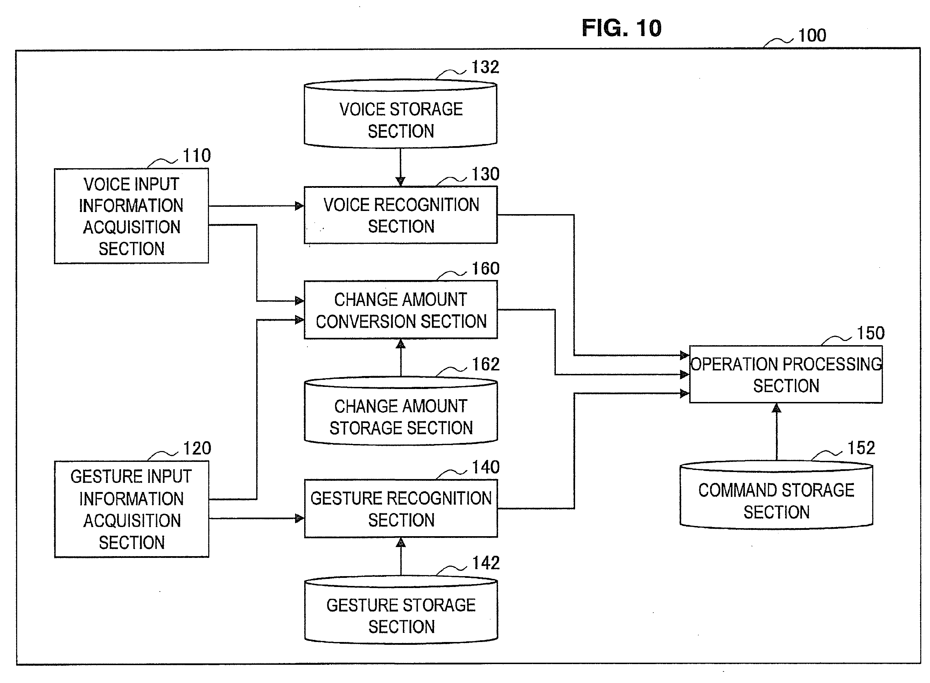

Hereinafter, with reference to FIGS. 10 to 13, a configuration of the information processing apparatus according to the second embodiment of the present disclosure will be described.

FIG. 10 is a block diagram showing a functional configuration of an information processing apparatus 100 according to the second embodiment of the present disclosure. Referring to FIG. 10, the information processing apparatus 100 includes a voice input information acquisition section 110, a gesture input information acquisition section 120, a voice recognition section 130, a voice storage section 132, a gesture recognition section 140, a gesture storage section 142, an operation processing section 150, a command storage section 152, a change amount conversion section 160, and a change amount storage section 162.

Of those, the voice recognition section 130, the voice storage section 132, the gesture recognition section 140, and the gesture storage section 142 are as described above as the first embodiment in [1-1. Configuration of information processing apparatus]. Accordingly, the following will be mainly described: the change amount conversion section 160 and the change amount storage section 162, which are newly added; and differences in functions from those in the first embodiment of the voice input information acquisition section 110, the gesture input information acquisition section 120, the operation processing section 150, and the command storage section 152.

The voice input information acquisition section 110 outputs voice input information to the change amount conversion section 160, and the change amount conversion section 160 recognizes execution amount information indicating the execution amount of a predetermined operation from the voice input information.

The gesture input information acquisition section 120 outputs gesture input information to the change amount conversion section 160, and the change amount conversion section 160 recognizes execution amount information indicating the execution amount of a predetermined operation from the gesture input information. In the present embodiment, the change amount conversion section 160 recognizes the execution amount information from at least the voice input information and the gesture input information.

The change amount storage section 162 stores the execution amount information indicating the execution amount of the predetermined operation and a determination criterion for recognizing the execution amount information from the voice input information or the gesture input information, as a change amount conversion dictionary.

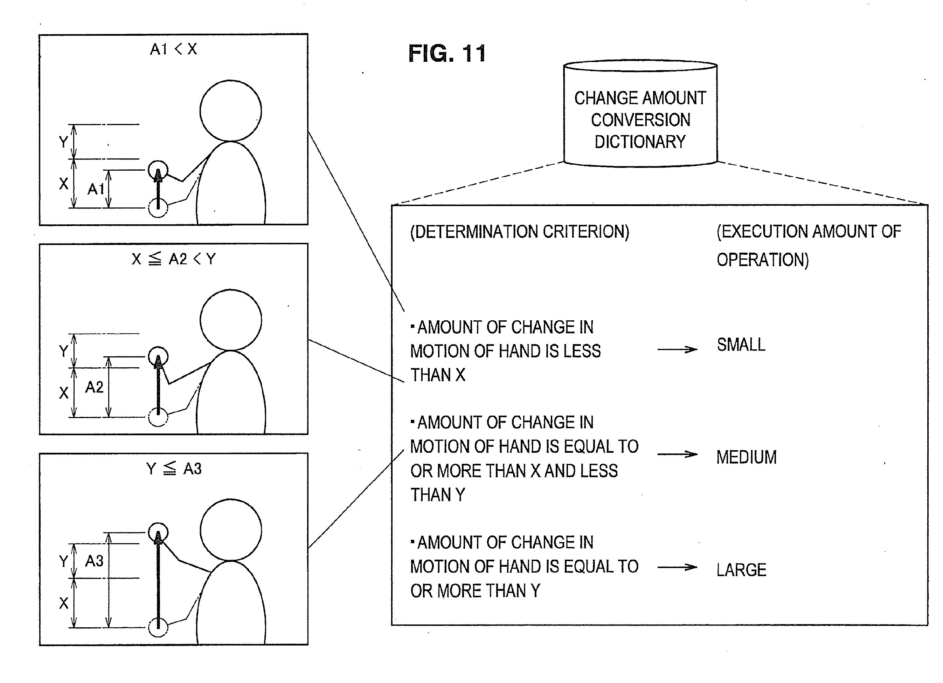

FIG. 11 shows an example of the change amount conversion dictionary stored in the change amount storage section 162. FIG. 11 shows an example of the change amount conversion dictionary in the case where the execution amount information is recognized based on the amount of change in the motion of the hand acquired from the gesture input information. In this case, in the change amount conversion dictionary, there are stored the following determination criteria, for example: in the case where "amount of change in motion of hand is less than X", the execution amount of operation is "small"; in the case where "amount of change in motion of hand is equal to or more than X and less than Y", the execution amount of operation is "medium"; and in the case where "amount of change in motion of hand is equal to or more than Y", the execution amount of operation is "large". Note that the execution amount of operation may be expressed as a numerical value.

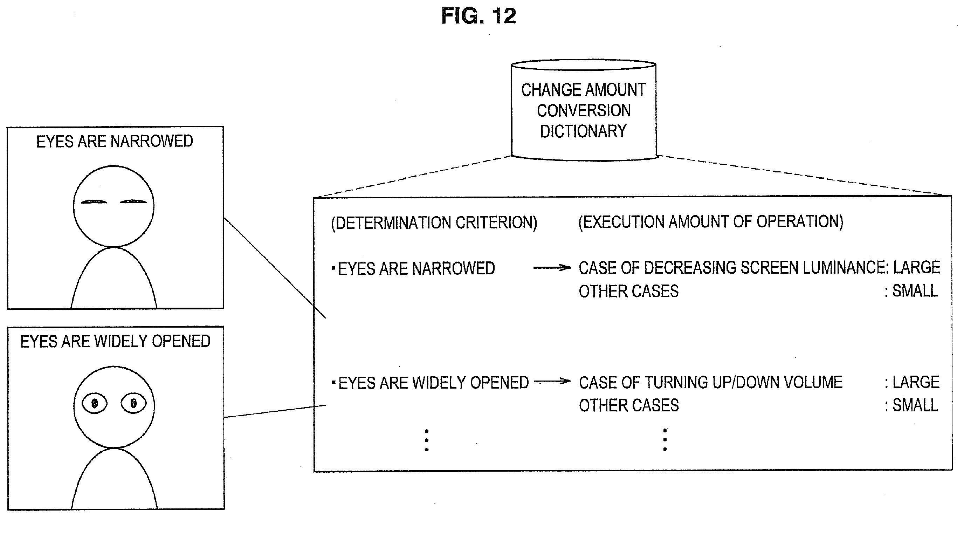

FIG. 12 shows an example of the change amount conversion dictionary stored in the change amount storage section 162. FIG. 12 shows an example of the change amount conversion dictionary in the case where the execution amount information is recognized from input information, which is acquired from the motion of eyes that is an example other than the gesture input information and which is different from the gesture input information using the motion of the hand. In this case, in the change amount conversion dictionary, there are stored the following determination criteria, for example: if "eyes are narrowed", in the "case of decreasing screen luminance, the execution amount of operation is large, and in the other cases, the execution amount of operation is small"; and if "eyes are widely opened", in the "case of turning up/down the volume, the execution amount of operation is large, and in the other cases, the execution amount of operation is small".

The change amount conversion section 160 recognizes the execution amount information from the volume acquired from the voice input information in the case where the input information is the voice input information, and the change amount conversion section 160 recognizes the execution amount information from the amount of change in the motion or the state of a part of or entire body acquired from the gesture input information in the case where the input information is the gesture input information.

In the case of recognizing the execution amount information from the volume, the change amount conversion section 160 acquires the volume of the voice from the voice input information. Alternatively, in the case of recognizing the execution amount information from the amount of change in the motion or the state of a part of or entire body, the change amount conversion section 160 acquires the amount of change in the motion or the state of a part of or entire body from the gesture input information. Here, the amount of change in the motion of a part of or entire body may be a degree to which the part of or entire body has changed between the start point and the end point of the motion, for example. Further, the amount of change in the state of a part of or entire body may be a degree to which the state of the part of or entire body that has been shot and the state of the part of or entire body that is regarded as a basis are different from each other. The acquisition of the amount of change in the motion or the state of a part of or entire body may be executed using technology in the past related to the known gesture recognition which has been used heretofore. Next, the change amount conversion section 160 acquires the execution amount of operation to which the volume or the amount of change corresponds according to the determination criterion from the change amount storage section 162. In this manner, the change amount conversion section 160 recognizes the execution amount information indicating the execution amount of operation. Finally, the change amount conversion section 160 outputs the recognized execution amount information to the operation processing section 150.

For example, gesture input information acquired by an operation of putting the hand up largely is input to the change amount conversion section 160. Then, the change amount conversion section 160 acquires an amount of change A3 in the motion of the hand from the gesture input information. Referring to FIG. 11, for example, since the measured amount of change A3 is equal to or more than Y, the execution amount information indicating that the execution amount of the operation is "large" is acquired from the change amount storage section 162. In this manner, the change amount conversion section 160 recognizes the execution amount information indicating that the execution amount of operation is "large".

Note that the change amount conversion section 160 may recognize the execution amount information indicating the execution amount of the predetermined operation from another piece of input information acquired by another input action, which is different from the voice input information and the gesture input information used for recognizing the semantic information. When the other input information is input, the change amount conversion section 160 acquires the determination criterion for recognizing the execution amount information based on the other input information, from the change amount storage section 162, for example. Next, the change amount conversion section 160 calculates a score representing the degree of matching between the other input information and each determination criterion, for example, and specifies the determination criterion having the largest score. Next, the change amount conversion section 160 extracts the execution amount information corresponding to the specified determination criterion from the change amount storage section 162. In this manner, for example, the change amount conversion section 160 may recognize the execution amount information from the other input information acquired from the other input action.

There will be described an example in the case where the other input action is the input action using the motion of the eyes. For example, the other input information acquired by the operation of narrowing the eyes is input to the change amount conversion section 160. Referring to FIG. 12, for example, the change amount conversion section 160 calculates the score between the other input information and each determination criterion, and, using the result thereof, specifies "eyes are narrowed" that is the determination criterion having the largest score. Accordingly, the change amount conversion section 160 extracts "case of decreasing screen luminance, the execution amount of operation is large, and in the other cases, the execution amount of operation is small", which is the execution amount of the operation corresponding to the determination criterion "eyes are narrowed", as the execution amount information.

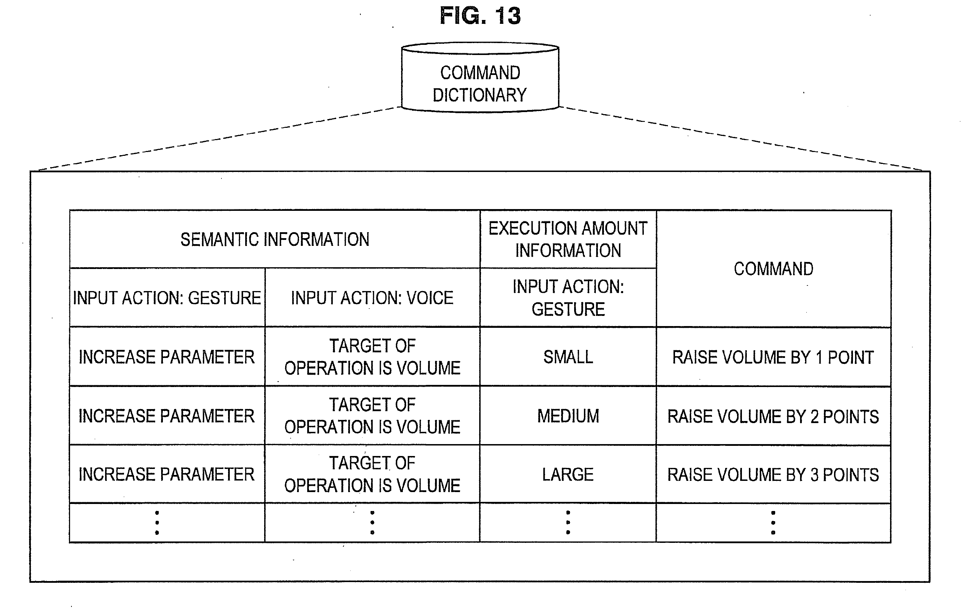

The command storage section 152 stores a command for causing the target device to execute a predetermined amount of operation and a combination of the semantic information and the execution amount information corresponding to the command, as a command dictionary. FIG. 13 shows another example of the command dictionary stored in the command storage section 152. Referring to FIG. 13, in the command dictionary, there are stored commands such as "raise volume by 1 point" and "raise volume by 3 points". Further, in the command dictionary, there are stored combinations of the pieces of semantic information such as "increase parameter" and "target of operation is volume", and the pieces of execution amount information such as "small" and "large".

The operation processing section 150 combines two or more types of semantic information and the execution amount information, thereby generating a command for causing the target device to execute the predetermined amount of operation. The pieces of semantic information used here are the following two types of semantic information: the semantic information recognized by the voice recognition section 130; and the semantic information recognized by the gesture recognition section 140. When not only the semantic information but also the execution amount information is input by the change amount conversion section 160, the operation processing section 150 acquires the command corresponding to the combination of the semantic information and the execution amount information from the command storage section 152.

### [2-2. Flow of processing]

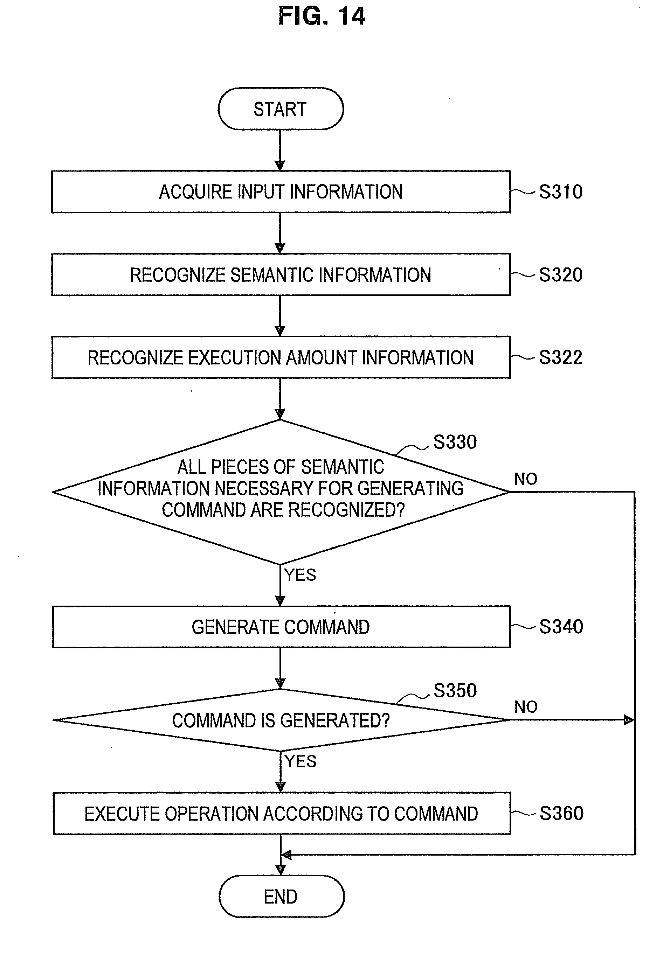

Hereinafter, with reference to FIG. 14, there will be described command generation processing according to the second embodiment of the present disclosure. FIG. 14 is a flowchart showing the command generation processing according to the second embodiment. Of those, Step S310, Step S320, Step S330, Step S350, and Step S360 are the same as those in the command generation processing according to the first embodiment in [1-2. Flow of processing]. Accordingly, the following will be mainly described: Step S322, which is newly added; and a different part in Step S340, in which a part of the processing is different from that in the first embodiment.

In Step S322, the change amount conversion section 160 recognizes the execution amount information indicating the execution amount of the predetermined operation from any one of the pieces of input information including the voice input information and the gesture input information for recognizing the semantic information.

Further, in Step S340, the operation processing section 150 combines two or more types of semantic information and the execution amount information, thereby generating a command for causing the target device to execute the predetermined amount of operation.

### <3. Third embodiment>

An information processing apparatus according to a third embodiment of the present disclosure is further added with a function of performing recognition of semantic information adapted to the characteristics of each user, to the function that the information processing apparatus according to the first embodiment of the present disclosure has.

### [3-1. Configuration of information processing apparatus]

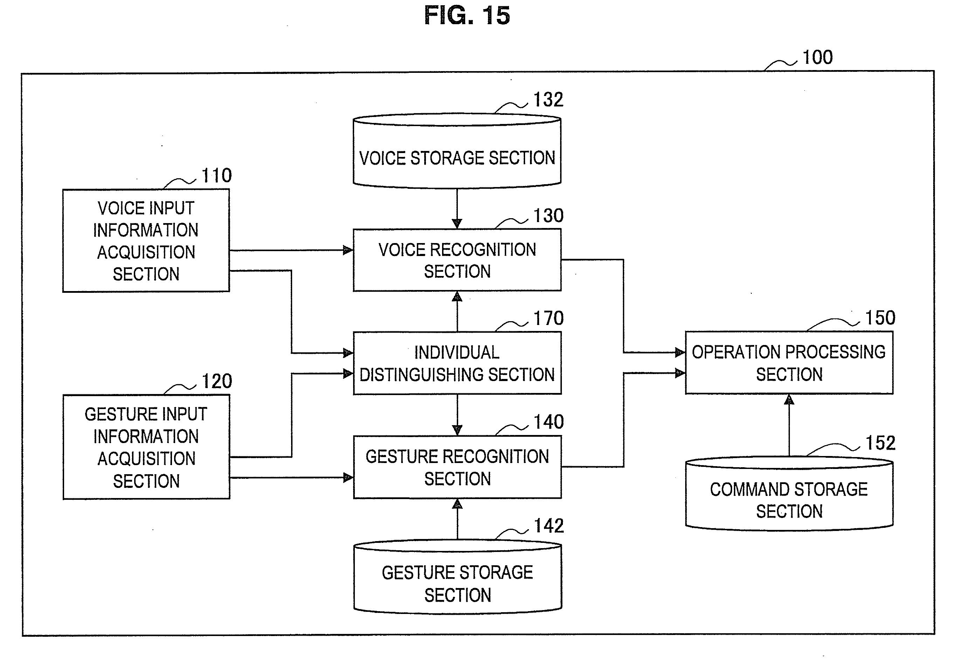

Hereinafter, with reference to FIGS. 15 to 17, the configuration of the information processing apparatus according to the third embodiment of the present disclosure will be described.

FIG. 15 is a block diagram showing a functional configuration of an information processing apparatus 100 according to the third embodiment of the present disclosure. Referring to FIG. 15, the information processing apparatus 100 includes a voice input information acquisition section 110, a gesture input information acquisition section 120, a voice recognition section 130, a voice storage section 132, a gesture recognition section 140, a gesture storage section 142, an operation processing section 150, a command storage section 152, and an individual distinguishing section 170 (i.e., a user identification unit).

Of those, the operation processing section 150 and the command storage section 152 are as described above as the first embodiment in [1-1. Configuration of information processing apparatus]. Accordingly, the following will be mainly described: the individual distinguishing section 170, which is newly added; and differences in functions from those in the first embodiment of the voice input information acquisition section 110, the gesture input information acquisition section 120, the voice recognition section 130, the voice storage section 132, the gesture recognition section 140, and the gesture storage section 142.

In the case where the individual distinguishing section 170 specifies a user ID of a user performing an input action based on the voice input information, the voice input information acquisition section 110 outputs the voice input information to the individual distinguishing section 170.

In the case where the individual distinguishing section 170 specifies a user ID of a user performing an input action based on the gesture input information, the gesture input information acquisition section 120 outputs the gesture input information to the individual distinguishing section 170.

The individual distinguishing section 170 specifies the user ID of the user performing the input action, from among the user ID's which are registered in advance. The individual distinguishing section 170 specifies a user ID which is registered in advance based on the voice input information or the gesture input information acquired by the input action performed by the user, for example. For example, in the case of specifying the user ID based on the voice input information, when the voice input information is input, the individual distinguishing section 170 compares the voice information of the voice input information with a feature quantity of the voice of each user which is registered in advance. The individual distinguishing section 170 specifies the best matching feature quantity based on the result of the comparison, thereby specifying the user ID, for example. Further, in the case of specifying the user ID based on the gesture input information, when the gesture input information is input, the individual distinguishing section 170 compares the image of the face of the user in the gesture input information with a feature quantity of the face of each user which is registered in advance, for example. The individual distinguishing section 170 specifies the best matching feature quantity based on the result of the comparison, thereby specifying the user ID, for example. Finally, the individual distinguishing section 170 outputs the specified user ID to the voice recognition section 130 and to the gesture recognition section 140. Note that the individual distinguishing section 170 may not use the input information for recognizing the semantic information for the specification of the user ID, and may use another piece of information. For example, there may be used the other piece of information that is different from the input information for recognizing the semantic information, such as information read from a user ID card and user ID information input by an input device such as a remote controller, a mouse, and a keyboard.

The voice storage section 132 and the gesture storage section 142 stores a voice recognition dictionary and a gesture recognition dictionary for each user ID, respectively.

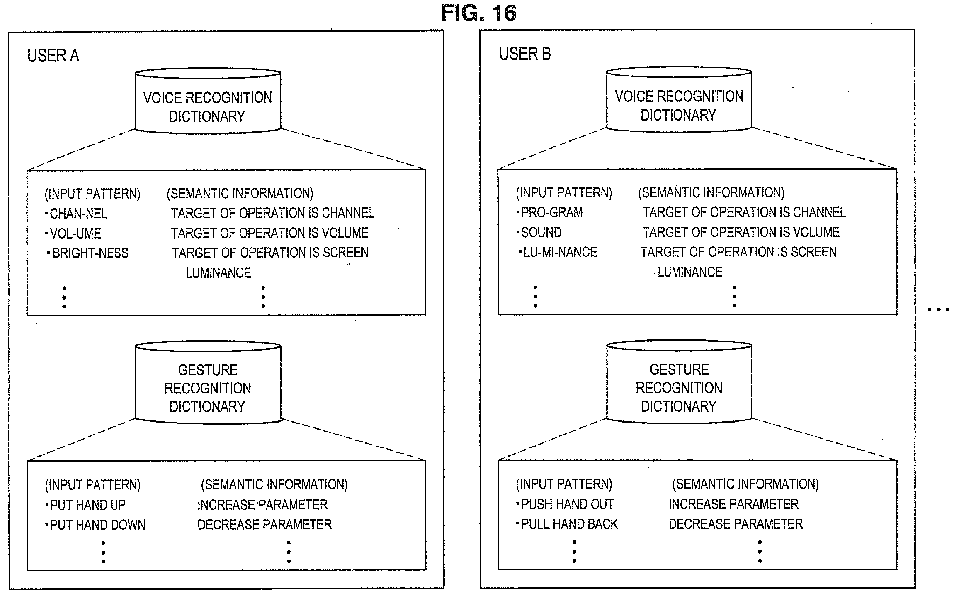

FIG. 16 shows an example of the voice recognition dictionary and the gesture recognition dictionary for each user ID. In FIG. 16, there is shown an example of the voice recognition dictionary and the gesture recognition dictionary for each user ID, in which input patterns that are set in advance for each user ID are stored. Referring to FIG. 16, in the voice recognition dictionary of a user A, there are stored input patterns such as "chan-nel" and "vol-ume". On the other hand, in the voice recognition dictionary of a user B, there are stored input patterns such as "pro-gram" and "sound". Further, in the gesture recognition dictionary of the user A, there are stored input patterns such as "put hand up" and "put hand down". On the other hand, in the gesture recognition dictionary of the user B, there are stored input patterns such as "push hand out" and "pull hand back". Note that there is also stored semantic information associated with the input pattern.

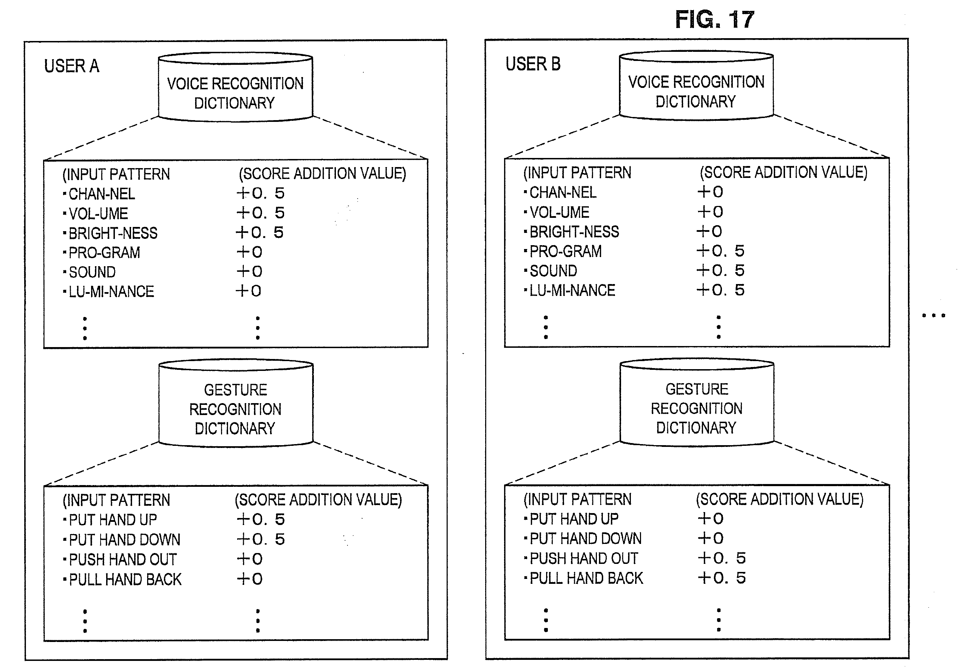

Further, FIG. 17 shows another example of the voice recognition dictionary and the gesture recognition dictionary for each user ID. In FIG. 17, there is shown an example of the voice recognition dictionary and the gesture recognition dictionary for each user ID, in which a degree of priority that is set in advance for each user ID with respect to the input pattern is stored. Referring to FIG. 17, in the voice recognition dictionary of the user A, there is stored the score addition value "+0.5" as the degree of priority with respect to the input pattern "chan-nel", for example. On the other hand, in the voice recognition dictionary of the user B, there is stored the score addition value "+0" as the degree of priority with respect to the input pattern "chan-nel", for example. Further, in the gesture recognition dictionary of the user A, there is stored the score addition value "+0" as the degree of priority with respect to the input pattern "push hand out", for example. On the other hand, in the gesture recognition dictionary of the user B, there is stored the score addition value "+0.5" as the degree of priority with respect to the input pattern "push hand out", for example. Note that, although not shown in FIG. 17, there is also stored semantic information associated with the input pattern.

The voice recognition section 130 and the gesture recognition section 140 each recognize semantic information adapted to the characteristics of the user performing the input action, in accordance with the specified user ID. For example, the voice recognition section 130 and the gesture recognition section 140 each specify, in accordance with the specified user ID, an input pattern corresponding to input information among the input patterns for each user ID, and extract the semantic information associated with the input pattern.

Since the voice recognition section 130 and the gesture recognition section 140 perform the same processing, the description will be made by taking the voice recognition section 130 as an example. To the voice recognition section 130, the voice input information is input by the voice input information acquisition section 110, and further, the user ID specified by the individual distinguishing section 170 is input. The voice recognition section 130 acquires the input pattern which is stored in the voice recognition dictionary of the specified user ID and which is set in advance with respect to the specified user ID. Next, the voice recognition section 130 calculates a score representing the degree of matching between the voice input information and each input pattern, for example, and specifies the input pattern having the largest score. Next, the voice recognition section 130 extracts the semantic information associated with the specified input pattern in the voice recognition dictionary of the specified user ID from the voice storage section 132. In this manner, the voice recognition section 130 recognizes the semantic information adapted to the characteristics of the user, using the input pattern which is set in advance for each user ID, for example.

For example, the voice input information acquired by the voice "vol-ume" performed by the user A is input to the voice recognition section 130. Referring to FIG. 16, for example, the voice recognition section 130 specifies "vol-ume" that is an input pattern stored in the voice recognition dictionary of the user A. Accordingly, the voice recognition section 130 extracts "target of operation is volume", which is the semantic information associated with "vol-ume", as the semantic information.

Note that the voice recognition section 130 and the gesture recognition section 140 may each specify the input pattern corresponding to the input information based on the degree of priority that is set in advance for each user ID with respect to the input pattern, in accordance with the specified user ID, and may each extract the semantic information associated with the input pattern. For example, to the voice recognition section 130, the voice input information is input by the voice input information acquisition section 110, and further, the user ID specified by the individual distinguishing section 170 is input. The voice recognition section 130 acquires the input pattern and the degree of priority that is set in advance with respect to the input pattern such as the score addition value, which are stored in the voice recognition dictionary of the specified user ID. Next, the voice recognition section 130 calculates a score representing the degree of matching between the voice input information and each input pattern, and calculates the sum of the score and the score addition value of each input pattern. The voice recognition section 130 specifies the input pattern having the largest sum, for example. Next, the voice recognition section 130 extracts the semantic information associated with the specified input pattern in the voice recognition dictionary of the specified user ID from the voice storage section 132. In this manner, the voice recognition section 130 recognizes the semantic information adapted to the characteristics of the user, using the degree of priority which is set in advance for each user ID, for example.

Heretofore, as the specific examples of the technique of recognizing the semantic information adapted to the characteristics of the user performing the input action, there have been described the case of using the input pattern which is set in advance for each user ID and a case of using the degree of priority which is set in advance for each user ID. However, the technique of recognizing the semantic information adapted to the characteristics of the user performing the input action are not limited to those specific examples, and the recognition may be executed using another specific technique.

### [3-2. Flow of processing]

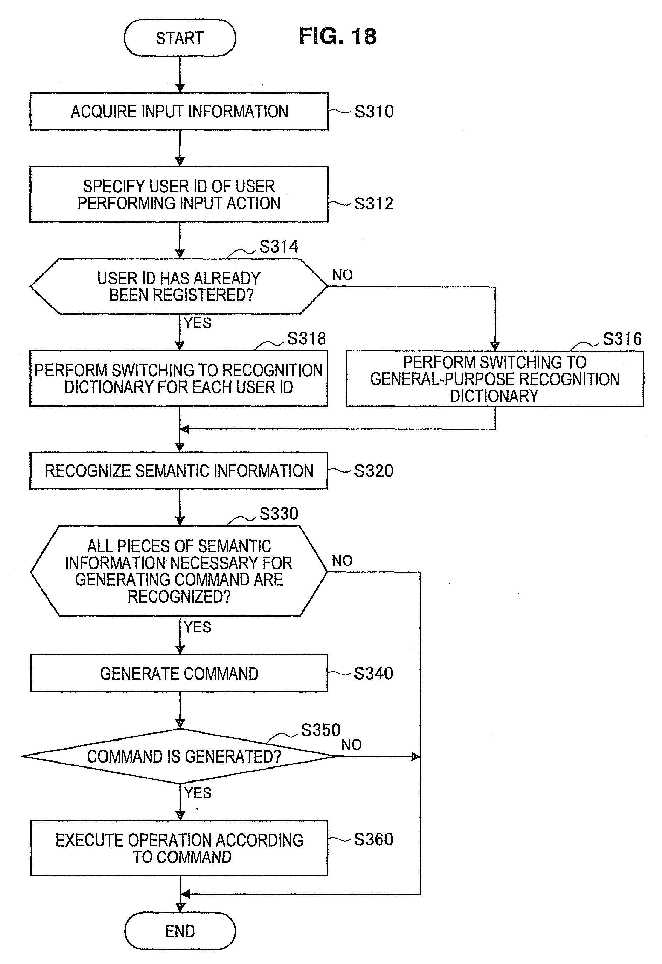

Hereinafter, with reference to FIG. 18, there will be described command generation processing according to the third embodiment of the present disclosure. FIG. 18 is a flowchart showing the command generation processing according to the third embodiment. Of those, Step S310, Step S330, Step S340, Step S350, and Step S360 are the same as those in the command generation processing according to the first embodiment in [1-2. Flow of processing]. Accordingly, the following will be mainly described: Step S312, Step S314, Step S316, and Step S318, which are newly added; and a different part in Step S320, in which a part of the processing is different from that in the first embodiment.

In Step S 312, the individual distinguishing section 170 specifies the user ID of the user performing the input action from among the user ID's, which are registered in advance, from the voice input information or the gesture input information.

In Step S 314, the individual distinguishing section 170 determines whether the user ID has already been registered. Here, in the case where the user ID is not registered, that is, in the case where the user ID is not specified, the individual distinguishing section 170 outputs a notification indicating that the user ID cannot be specified to the voice recognition section 130 and the gesture recognition section 140. After that, the processing proceeds to Step S316. On the other hand, in the case where the user ID is registered, that is, in the case where the user ID is specified, the individual distinguishing section 170 outputs the user ID to the voice recognition section 130 and the gesture recognition section 140. After that, the processing proceeds to Step S318.

In Step S316, the voice recognition section 130 and the gesture recognition section 140 determine to use a general-purpose voice recognition dictionary and a general-purpose gesture recognition dictionary, respectively.

In Step S318, the voice recognition section 130 and the gesture recognition section 140 determine to use a voice recognition dictionary for each user ID and a gesture recognition dictionary for each user ID, respectively.

Further, in Step S320, the voice recognition section 130 and the gesture recognition section 140 each recognize semantic information using the voice recognition dictionary and the gesture recognition dictionary that are determined to be used, respectively. In particular, in the case of using the voice recognition dictionary and the gesture recognition dictionary for each user ID, the voice recognition section 130 and the gesture recognition section 140 each recognize the semantic information adapted to the characteristics of the user performing the input action, in accordance with the specified user ID. For example, the voice recognition section 130 and the gesture recognition section 140 each specify, in accordance with the specified user ID, an input pattern corresponding to input information from among the input patterns for each user ID, and extract the semantic information associated with the input pattern.

### <4. Fourth embodiment>

An information processing apparatus according to a fourth embodiment of the present disclosure is further added with a function that makes it possible to omit one of the input actions for generating a command, to the function that the information processing apparatus according to the first embodiment of the present disclosure has.

### [4-1. Configuration of information processing apparatus]

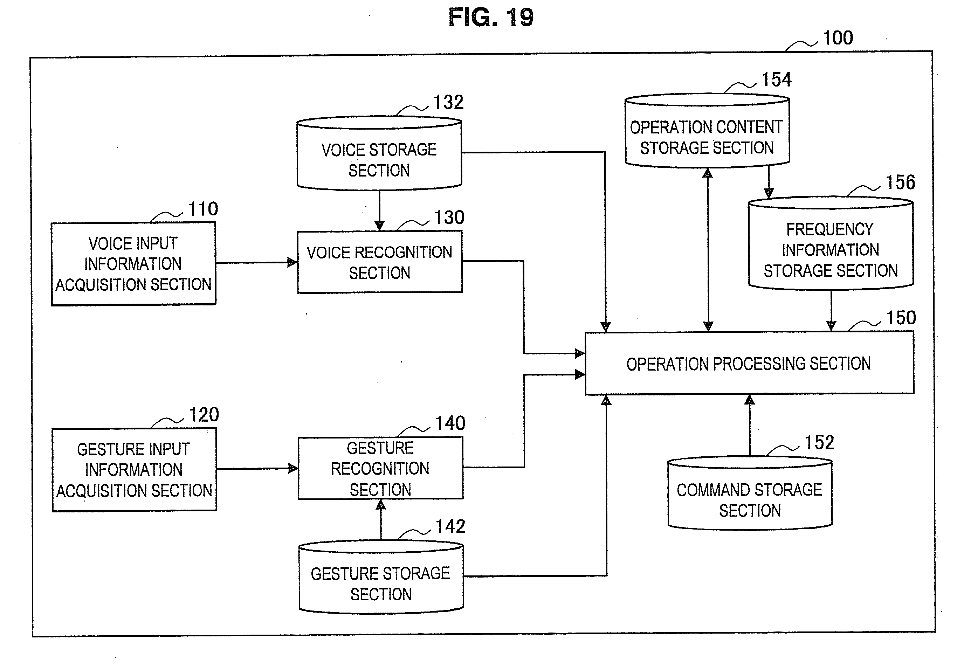

Hereinafter, with reference to FIGS. 19 to 24, the configuration of the information processing apparatus according to the fourth embodiment of the present disclosure will be described.

FIG. 19 is a block diagram showing a functional configuration of an information processing apparatus 100 according to the fourth embodiment of the present disclosure. Referring to FIG. 19, the information processing apparatus 100 includes a voice input information acquisition section 110, a gesture input information acquisition section 120, a voice recognition section 130, a voice storage section 132, a gesture recognition section 140, a gesture storage section 142, an operation processing section 150, a command storage section 152, an operation content storage section 154, and a frequency information storage section 156 (i.e., a frequency information unit).

Of those, the voice input information acquisition section 110, the gesture input information acquisition section 120, the voice recognition section 130, the voice storage section 132, the gesture recognition section 140, and the gesture storage section 142 are as described above as the first embodiment in [1-1. Configuration of information processing apparatus]. Accordingly, the following will be mainly described: the operation content storage section 154 and the frequency information storage section 156, which are newly added; and differences in functions from those in the first embodiment of the operation processing section 150 and the command storage section 152.

The operation content storage section 154 stores the predetermined number of latest generated commands. For example, the operation content storage section 154, which generates one command every time the command generation process shown in FIG. 9 is repeated, acquires, every time the operation processing section 150 generates a command, the generated command from the operation processing section 150. Then, the operation content storage section 154 updates the stored command based on the generated command. Note that the operation content storage section 154 may store commands which are generated within a predetermined time period up to the start point of the latest command generation process out of the command generation processes repeatedly executed by the operation processing section 150.

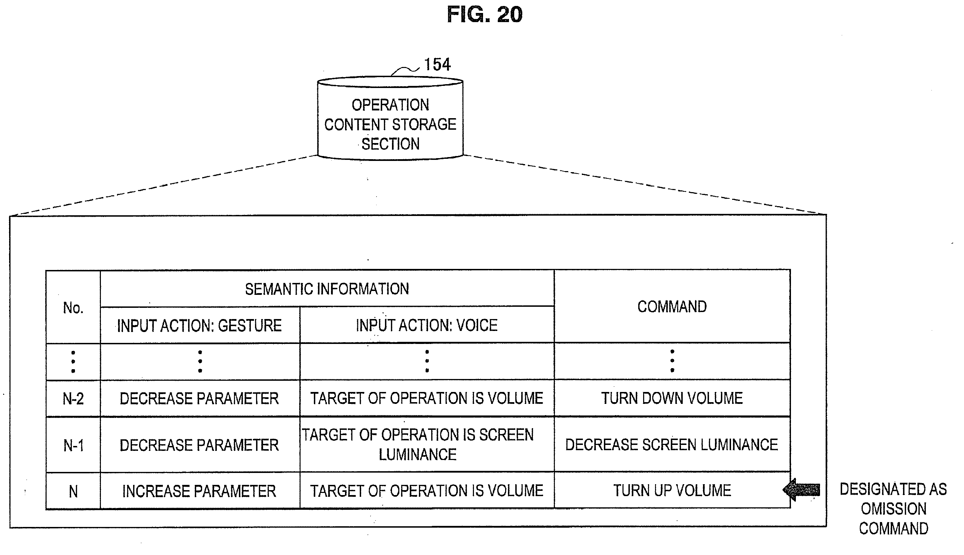

FIG. 20 shows an example of information stored in the operation content storage section 154. Referring to FIG. 20, the operation content storage section 154 stores N latest generated commands. For example, the command "turn up volume" is stored as the latest command. Further, for example, the pieces of semantic information "increase parameter" and "target of operation is volume", which correspond to the command "turn up volume" are also stored.

The frequency information storage section 156 stores a generation frequency of each command. For example, every time the operation content storage section 154 acquires a newly generated command, the frequency information storage section 156 acquires the new command from the operation content storage section 154. Then, the frequency information storage section 156 updates the stored generation frequency of each command based on the new command. Note that the generation frequency of the command represents the number of times the command has been generated within a predetermined period.

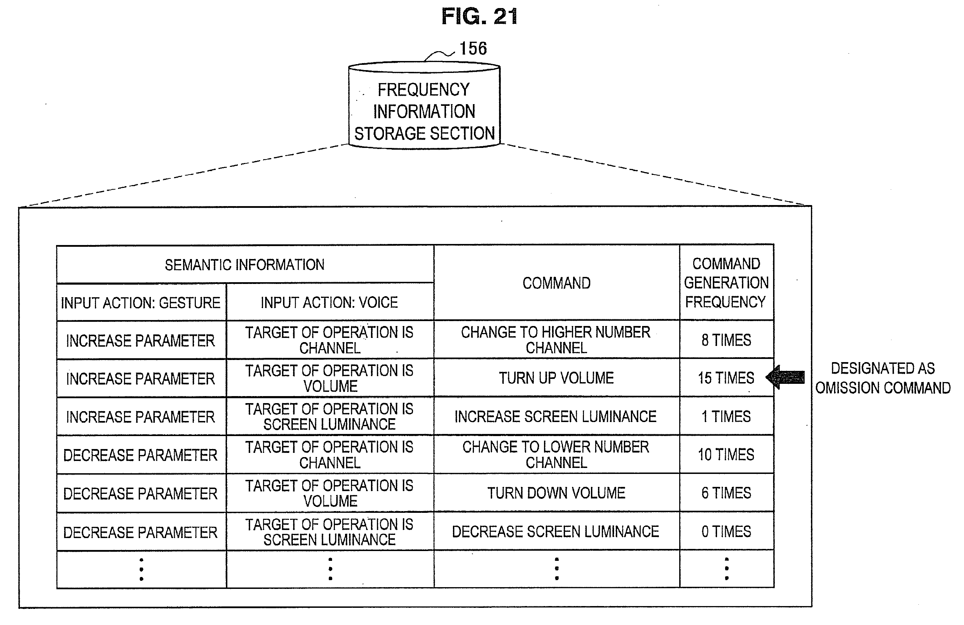

FIG. 21 shows an example of information stored in the frequency information storage section 156. Referring to FIG. 21, for example, with respect to the command "change to higher number channel", the generation frequency of the command of "8 times" is stored. Further, with respect to the command "change to higher number channel", there are also stored the pieces of semantic information "increase parameter" and "target of operation is channel".

In addition to each command and the combination of the pieces of semantic information corresponding thereto, the command storage section 152 also stores omission target identification indicating the command designated as an omission target. For example, the command storage section 152 stores, for each command, omission target identification information indicating whether the command is the omission target.

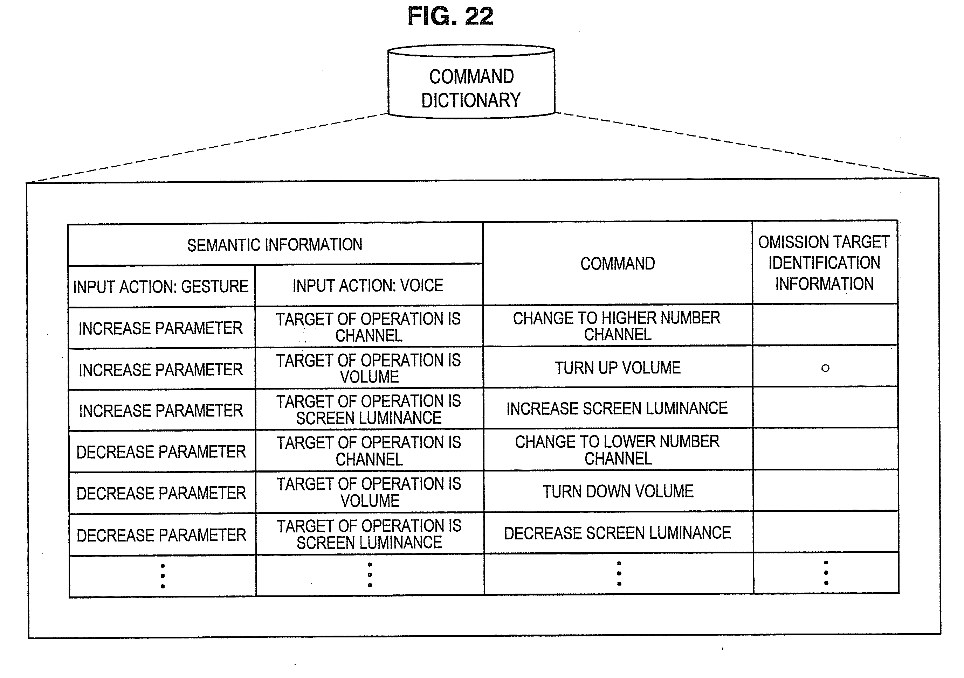

FIG. 22 shows an example of the command dictionary stored in the command storage section 152. Referring to FIG. 22, for example, there is provided omission target identification information, at the right side of the command, indicating whether the command is the omission target, and in here, the command "turn up volume" is designated as the omission target.

In the case where the command is designated as the omission target for which at least one of the input actions can be omitted, the operation processing section 150 generates a command when one or more types of semantic information are recognized out of two or more types of semantic information for generating the command. The pieces of semantic information used here are two types of semantic information, which are the semantic information recognized by the voice recognition section 130 and the semantic information recognized by the gesture recognition section 140. For example, in the case where the semantic information is input from only one of the voice recognition section 130 and the gesture recognition section 140 within a predetermined time period, the operation processing section 150 searches the command storage section 152 for a command which may be generated from the input semantic information and which is designated as the omission target. If there is the command designated as the omission target, the operation processing section 150 acquires the command from the command storage section 152. In the case where the command designated as the omission target is present, the operation processing section 150 determines the command as the command for causing the target device to execute the predetermined operation. In this manner, the operation processing section 150 generates the command designated as the omission target.

For example, to the operation processing section 150, the semantic information "increase parameter" is input by the gesture recognition section 140, and no semantic information is input by the voice recognition section 130. Referring to FIG. 22, since the command "turn up volume" is designated as the omission target, the operation processing section 150 acquires the command "turn up volume" from the command storage section 152 based on the semantic information "increase parameter". Then, the operation processing section 150 determines the semantic information "turn up volume" as the command for causing the target device to execute the predetermined operation.

Further, the operation processing section 150 designates a specific command as the omission target. For example, the operation processing section 150 designates a specific command as the omission target based on the generation frequency of the command. For example, the operation processing section 150 designates the command having the lighest generation frequency out of the commands stored in the frequency information storage section 156 as the omission target. Referring to FIG. 21, for example, the operation processing section 150 designates the command "turn up volume" having the generation frequency of "15 times" as the omission target.

For example, the operation processing section 150 designates a specific command as the omission target based on at least one command out of the predetermined number of latest generated commands. For example, the operation processing section 150 designates the latest generated command as the omission target out of the commands stored in the operation content storage section 154. Referring to FIG. 20, for example, the operation processing section 150 designates the command "turn up volume", which is the latest generated command, as the omission target. Note that the operation processing section 150 may designate as the omission target a specific command based on the command which is generated within a predetermined time period up to the start point of the latest command generation process out of the command generation processes repeatedly executed by the operation processing section 150.

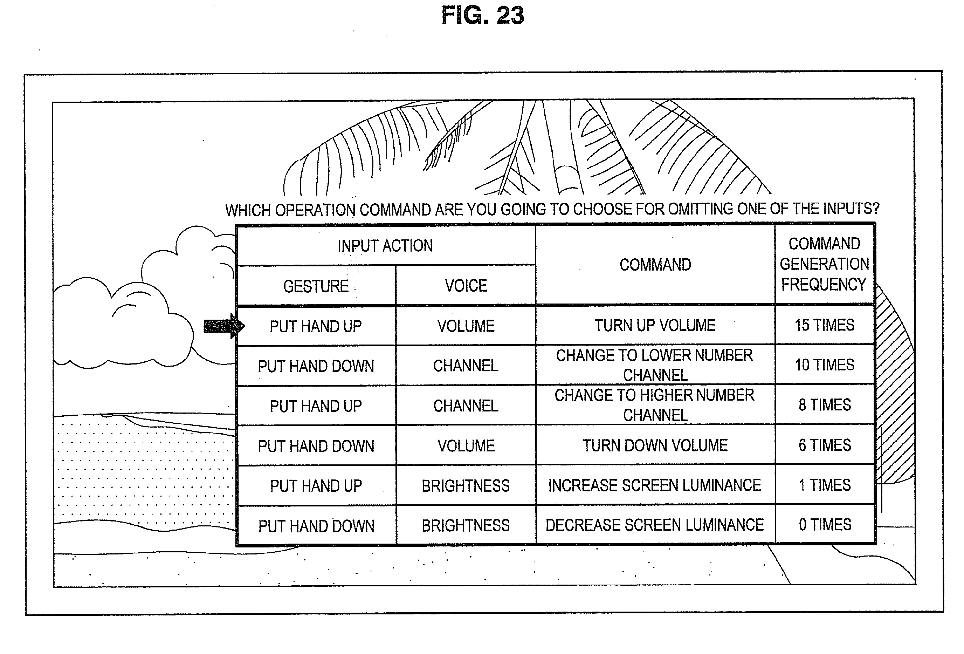

For example, the operation processing section 150 designates the specific command as the omission target based on the information on the omission target specified by the user. For example, the operation processing section 150 performs control such that a list of commands are displayed on a predetermined display screen, and designates the command selected by the input action performed by the user as the omission target. FIG. 23 shows an example of a display screen which displays a candidate for a command to be an omission target. Referring to FIG. 23, the operation processing section 150 designates as the omission target the command "turn up volume" selected by the input action performed by the user, for example.

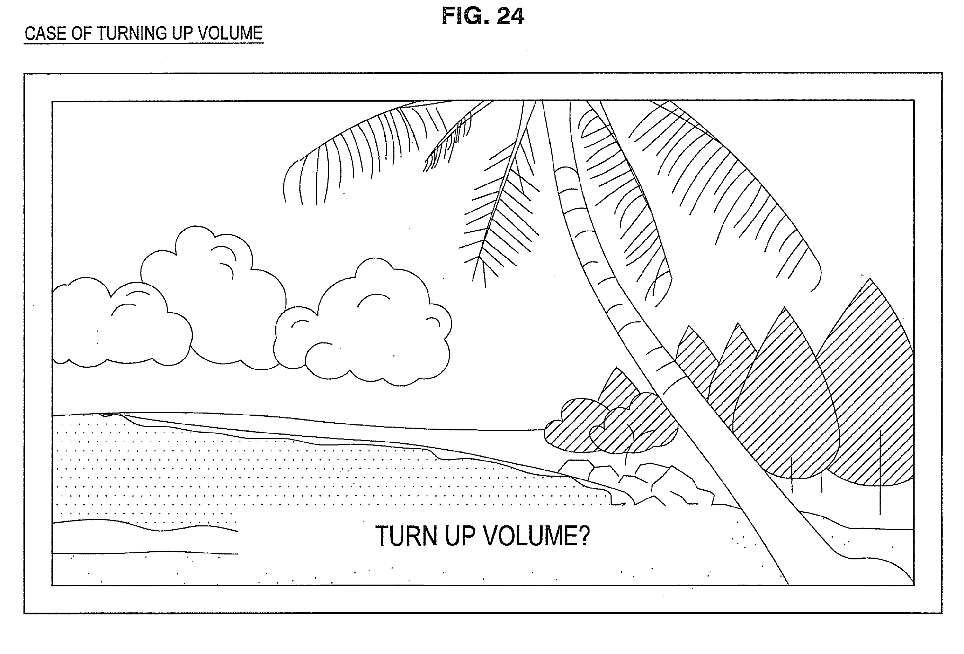

Note that, before the predetermined operation is executed in accordance with the command, the operation processing section 150 may perform control such that a confirmation display for causing the user to confirm whether or not to execute the predetermined operation is shown on a display screen of the target device or another device. FIG. 24 shows an example of a display screen which displays the confirmation display of whether or not to execute a command. Referring to FIG. 24, for example, in the case where the command "turn up volume", which is designated as an omission target, is generated, the operation processing section 150 performs control such that the confirmation display "turn up volume?" is shown on the display screen of the target device or another device.

### [4-2. Flow of processing]

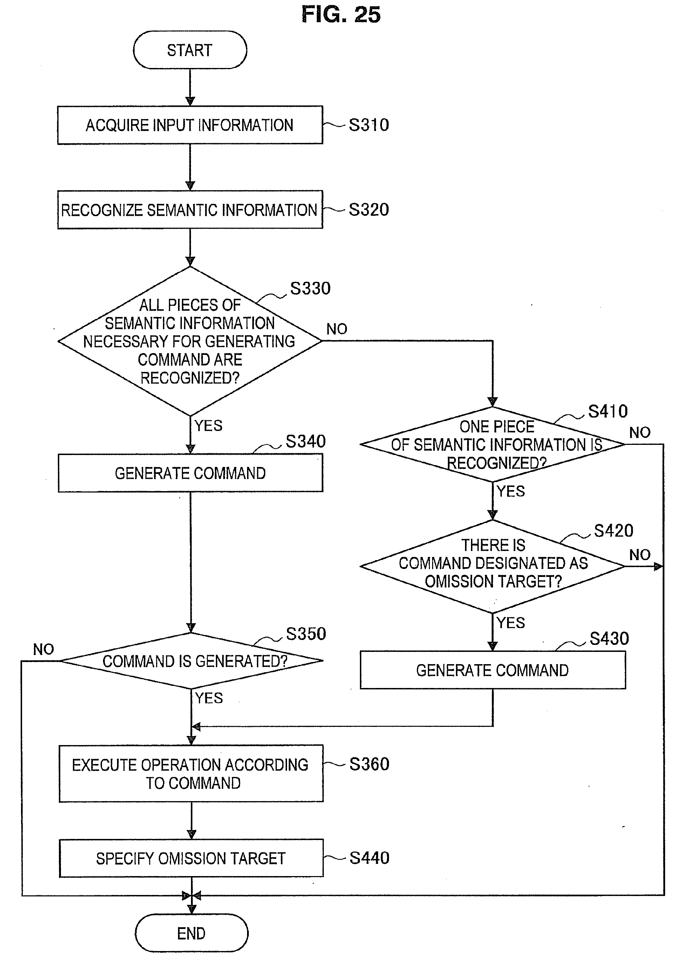

Hereinafter, with reference to FIG. 25, there will be described command generation processing according to the fourth embodiment of the present disclosure. FIG. 25 is a flowchart showing the command generation processing according to the fourth embodiment. Of those, Step S310, Step S320, Step S330, Step S340, Step S350, and Step S360 are the same as those in the command generation processing according to the first embodiment in [1-2. Flow of processing]. Accordingly, there will be mainly described Step S410, Step S420, Step S430, and Step S440, which are newly added.

In Step S410, the operation processing section 150 determines whether one piece of semantic information out of the two types of semantic information for generating a command is recognized. Here, when the one piece of semantic information is recognized, the processing proceeds to Step S420. On the other hand, in the case where neither of the pieces of semantic information is recognized, the processing is terminated.

Next, in Step S420, the operation processing section 150 determines whether there is a command which may be generated from the one piece of semantic information that has been input and which is designated as the omission target. For example, the operation processing section 150 acquires the command from the command storage section 152 based on the one piece of semantic information that has been input. Here, if there is the command, the processing proceeds to Step S430. On the other hand, if the command is not present, the processing is terminated.

Next, in Step S430, the operation processing section 150 generates a command designated as the omission target. For example, the operation processing section 150 determines the command acquired from the command storage section 152 as described above as the command for causing the target device to execute a predetermined operation.

Finally, in Step S440, the operation processing section 150 designates a specific command as the omission target.

### <5. Fifth embodiment>

An information processing apparatus according to a fifth embodiment of the present disclosure is further added with a function that makes it possible to show further candidates for the input action to a user when the user performs one of the input actions, to the function that the information processing apparatus according to the first embodiment of the present disclosure has. Further, there is also added with a function that makes it possible to show a state of the target of operation before the operation is executed in accordance with a command when the user performs one of the input actions.

### [5-1. Configuration of information processing apparatus]

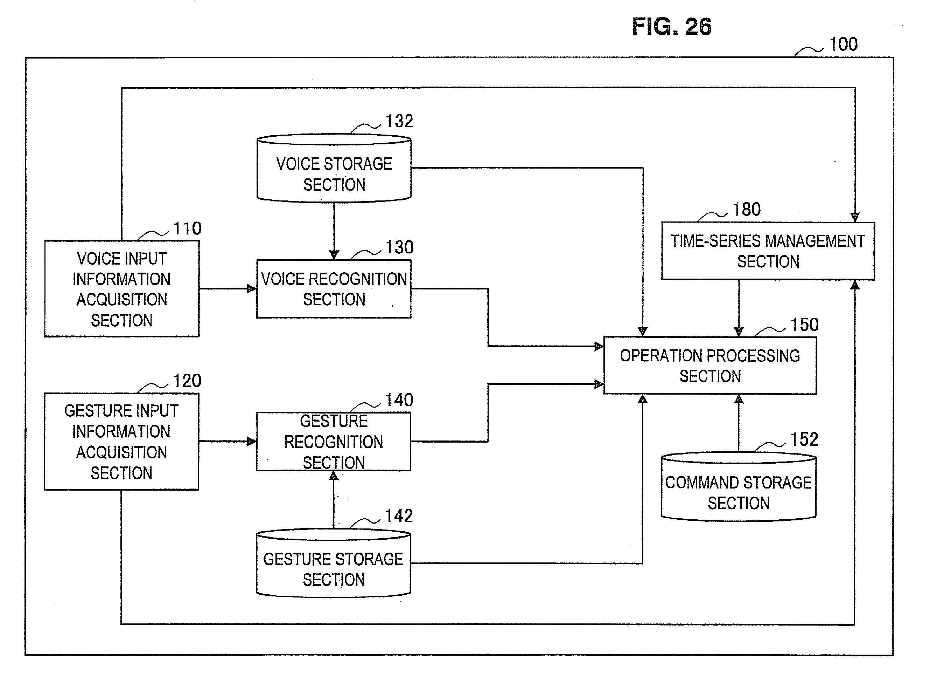

Hereinafter, with reference to FIGS. 26 to 30, the configuration of the information processing apparatus according to the fifth embodiment of the present disclosure will be described.

FIG. 26 is a block diagram showing a functional configuration of an information processing apparatus 100 according to the fifth embodiment of the present disclosure. Referring to FIG. 26, the information processing apparatus 100 includes a voice input information acquisition section 110, a gesture input information acquisition section 120, a voice recognition section 130, a voice storage section 132, a gesture recognition section 140, a gesture storage section 142, an operation processing section 150, a command storage section 152, and a time-series management section 180.

Of those, the voice recognition section 130, the gesture recognition section 140, and the command storage section 152 are as described above as the first embodiment in [1-1. Configuration of information processing apparatus]. Accordingly, the following will be mainly described: the time-series management section 180, which is newly added; and differences in functions from those in the first embodiment of the voice input information acquisition section 110, the gesture input information acquisition section 120, the voice storage section 132, the gesture storage section 142, and the operation processing section 150.

When the voice input information acquisition section 110 acquires voice input information from an input action using a voice, the voice input information acquisition section 110 outputs voice-acquired information indicating that the voice input information has been acquired to the time-series management section 180.

When the gesture input information acquisition section 120 acquires gesture input information from an input action using a motion or a state of a part of or entire body, the gesture input information acquisition section 120 outputs gesture-acquired information indicating that the gesture input information has been acquired to the time-series management section 180.

The voice storage section 132 stores an input pattern in the form that can be compared with the voice input information such as digitalized voice information and a feature quantity related to the voice, for example. In addition thereto, the voice storage section 132 also stores the input pattern in the form of text information or the like from which the user can understand the input action corresponding to the input pattern. In response to a request from the operation processing section 150, the voice storage section 132 outputs the input pattern to the operation processing section 150.

The gesture storage section 142 stores an input pattern in the form that can be compared with the gesture input information such as a moving image related to the motion of the hand and the feature quantity related to the motion of the hand, for example. In addition thereto, the gesture storage section 142 also stores the input pattern in the form from which the user can understand the input action corresponding to the input pattern, such as text information and a moving image or a still image showing the input action. In response to a request from the operation processing section 150, the gesture storage section 142 outputs the input pattern to the operation processing section 150.

The time-series management section 180 stores the acquisition status of the voice input information and the gesture input information in chronological order. Further, in response to the request from the operation processing section 150, the time-series management section 180 outputs the acquisition status of the voice input information and the gesture input information to the operation processing section 150. The time-series management section 180 may grasp the acquisition status of the voice input information and the gesture input information in chronological order based on the voice-acquired information and the gesture-acquired information, for example.

In the case where one or more types of semantic information are not recognized out of the semantic information necessary for generating the command, the operation processing section 150 specifies a candidate for unrecognized semantic information, and performs control such that the input action indicating the semantic information of the candidate is displayed on a display screen of a target device or another device.

For example, in the case where the semantic information is input from only one of the voice recognition section 130 and the gesture recognition section 140 within a predetermined time period, the operation processing section 150 confirms to the time-series management section 180 whether input information for recognizing the other semantic information has been acquired. Then, in the case where the input information has not been acquired, the operation processing section 150 acquires the semantic information, which is stored in combination with the semantic information that has already been recognized, as a candidate for the unrecognized semantic information from the command storage section 152. Next, the operation processing section 150 acquires the input pattern associated with the semantic information that is the candidate from the voice storage section 132 or the gesture storage section 142, for example. Then, the operation processing section 150 performs control such that the input action corresponding to the input pattern is displayed on the display screen of the target device or another device in the form that can be understood by the user, based on the acquired input pattern. The displayed input action is the candidate for the input action performed by the user for generating a command.

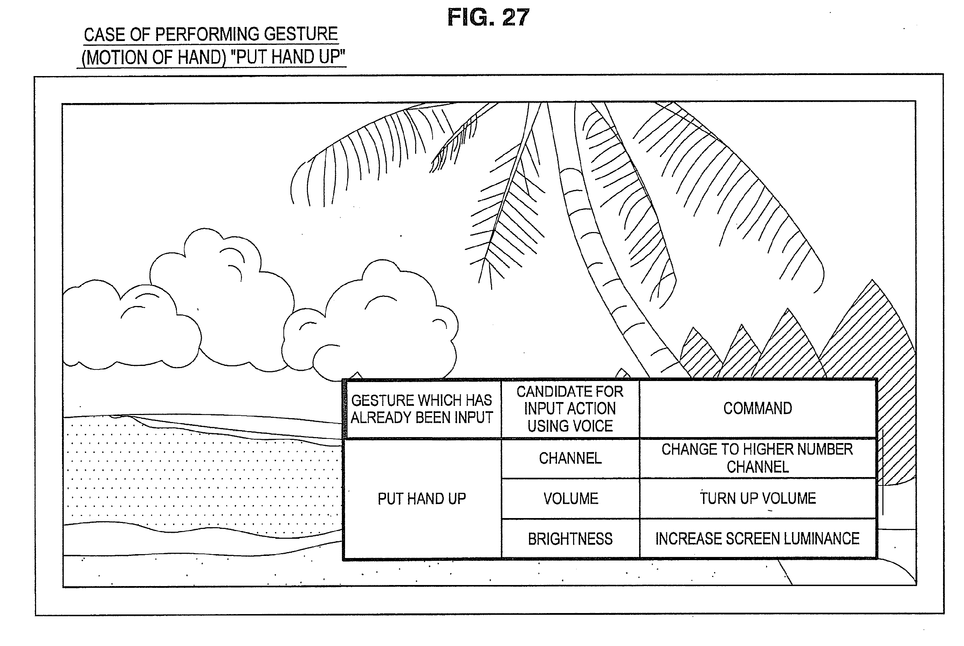

FIG. 27 shows an example of a display screen which displays a candidate for the input action. Referring to FIG. 3, from the input action "put hand up", the semantic information "increase parameter" is recognized by the gesture recognition section 140. Accordingly, the semantic information "increase parameter" is input to the operation processing section 150 from the gesture recognition section 140. In addition, referring to FIG. 5, in the command dictionary of the command storage section 152, the pieces of semantic information "target of operation is channel", "target of operation is volume", and "target of operation is screen luminance" are each stored in combination with the semantic information "put hand up". Accordingly, the operation processing section 150 acquires the candidates for the semantic information, "target of operation is channel", "target of operation is volume", and "target of operation is screen luminance", from the command storage section 152. Further, referring to FIG. 2, in the voice recognition dictionary of the voice storage section 132, the input patterns "chan-nel", "vol-ume", and "bright-ness" are stored in association with the pieces of semantic information "target of operation is channel", "target of operation is volume", and "target of operation is screen luminance", respectively. Accordingly, the operation processing section 150 acquires the input patterns "chan-nel", "vol-ume", and "bright-ness" from the voice storage section 132. Then, as shown in FIG. 27, the operation processing section 150 performs control such that the candidates for the input action using a voice, "channel", "volume", and "brightness", are displayed on the display screen.

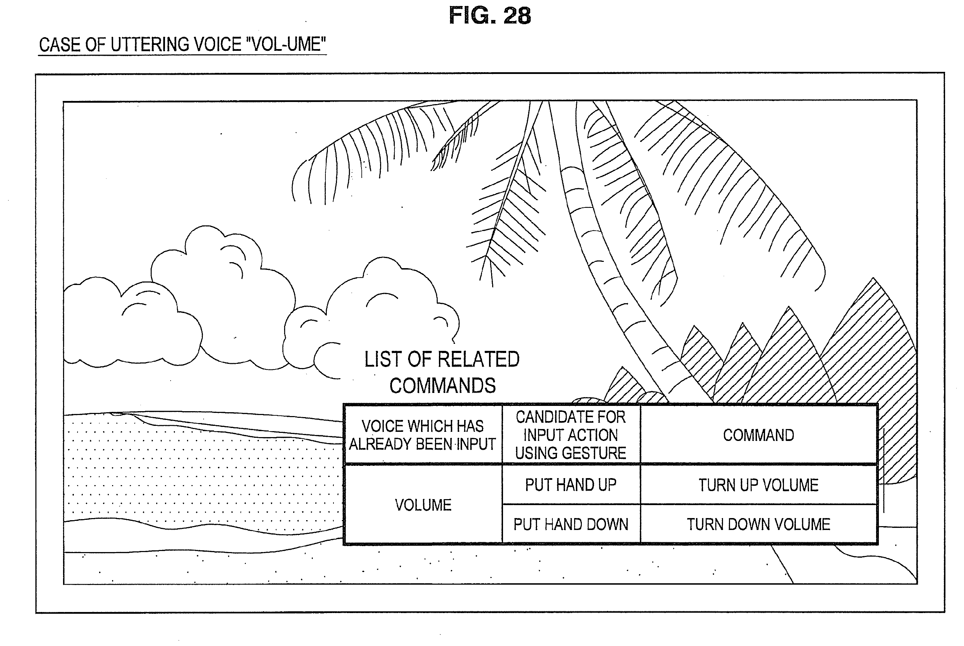

FIG. 28 shows another example of the display screen which displays the candidate for the input action. In FIG. 28, there is shown an example of the display screen in the case where the user performs the input action using the voice "vol-ume". The operation processing section 150 performs the same processing as described above, and then performs control as shown in FIG. 28 such that the candidates for the input action using a motion of the hand, "put hand up" and "put hand down", are displayed on the display screen.

Note that, in the case where one or more types of semantic information are not recognized out of the semantic information necessary for generating a command, the operation processing section 150 specifies a candidate for unrecognized semantic information, specifies the command to be generated based on as the candidate for the unrecognized semantic information and the semantic information which has already been recognized, and may perform control such that a state of the target of operation related to the target device before a predetermined operation is executed in accordance with the command is displayed on the display screen of the target device or another device.

The operation processing section 150 acquires the candidate for the unrecognized semantic information by the same processing as in the case of displaying the candidate for the input action described above, for example. Next, the operation processing section 150 acquires the command corresponding to the combination of the semantic information that has already been recognized and the semantic information of the candidate from the command storage section 152, for example. Then, the operation processing section 150 performs control such that a state of the target of operation related to the target device before a predetermined operation is executed in accordance with the command is displayed on the display screen.

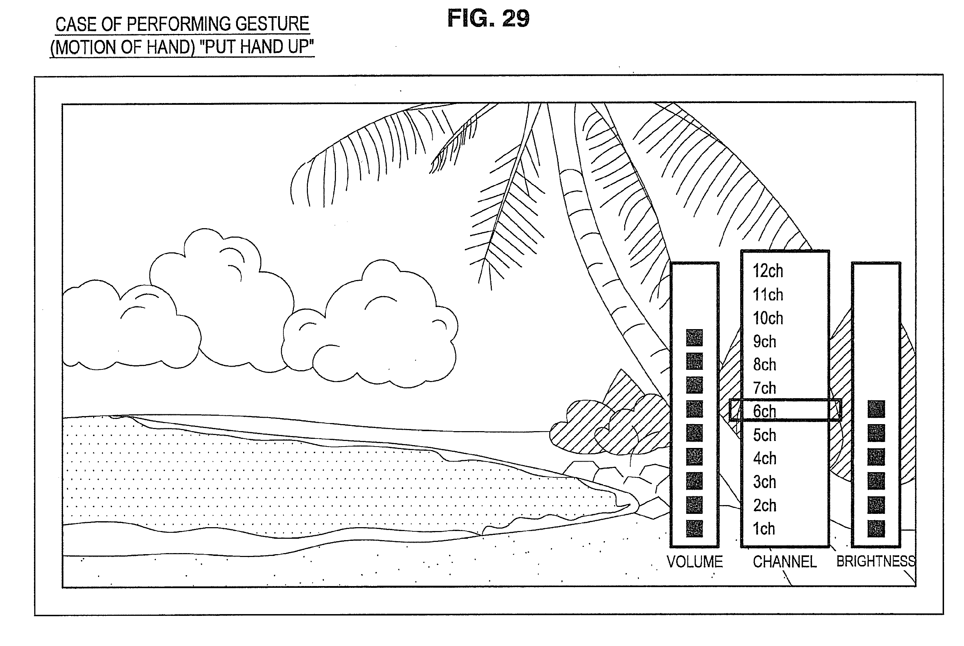

FIG. 29 shows an example of the display screen which displays a state of the target of operation related to the target device. In FIG. 29, there is shown an example of the display screen in the case where the user performs the input action using the motion of the hand "put hand up". In the same manner as in the case of FIG. 27, the semantic information "increase parameter" is input to the operation processing section 150 from the gesture recognition section 140. Further, in the same manner as in the case of FIG. 27, the operation processing section 150 acquires the candidates for the semantic information, "target of operation is channel", "target of operation is volume", and "target of operation is screen luminance", from the command storage section 152. Referring to FIG. 5, in the command dictionary of the command storage section 152, the commands "change to higher number channel", "turn up volume", and "increase screen luminance" are stored in association with the combinations of the following, respectively: the semantic information "increase parameter", which has already been recognized, and the respective candidates for the pieces of semantic information, "target of operation is channel", "target of operation is volume", and "target of operation is screen luminance". Therefore, the operation processing section 150 acquires the commands "change to higher number channel", "turn up volume", and "increase screen luminance" from the command storage section 152. Then, as shown in FIG. 29, the operation processing section 150 performs control such that the states of "channel", "volume", and "screen luminance" before the operation is executed in accordance with the commands "change to higher number channel", "turn up volume", and "increase screen luminance" are displayed on the display screen.

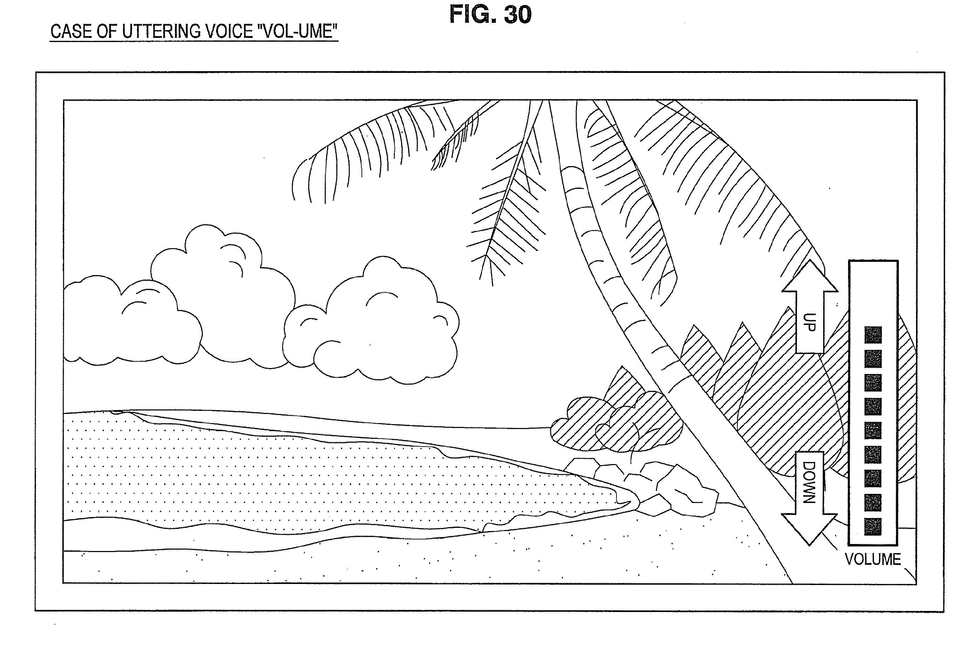

FIG. 30 shows another example of the display screen which displays the state of the target of operation related to the target device. In FIG. 30, there is shown an example of the display screen in the case where the user performs the input action using the voice "vol-ume". The operation processing section 150 performs the same processing as described above, and then performs control such that the state of "volume" before the operation is executed in accordance with the commands "turn up volume" and "turn down volume" is displayed on the display screen.

### [5-2. Flow of processing]

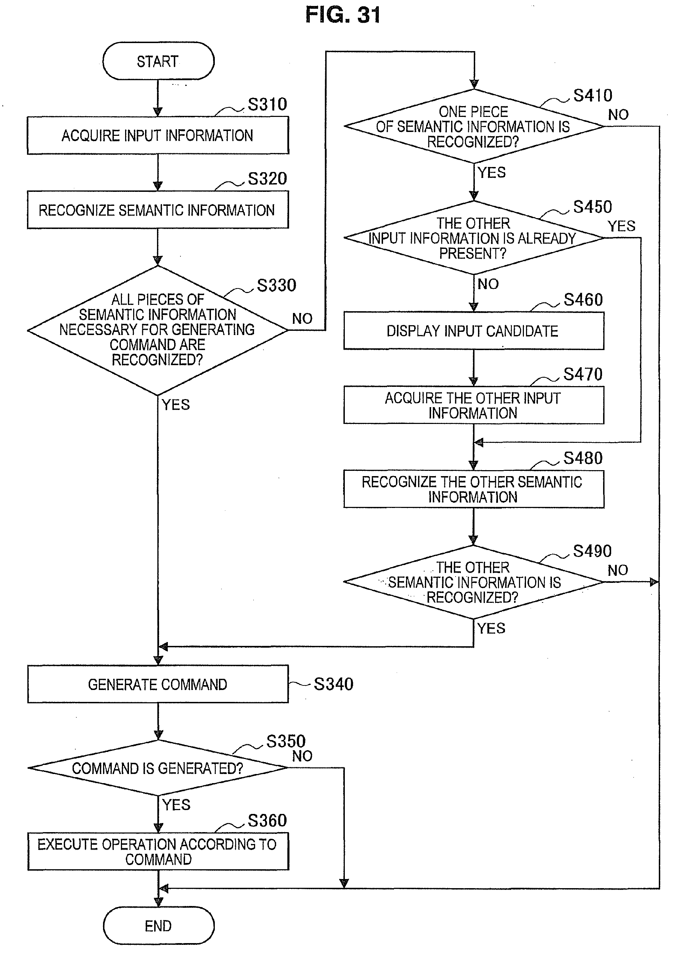

Hereinafter, with reference to FIG. 31, there will be described command generation processing according to the fifth embodiment of the present disclosure. FIG. 31 is a flowchart showing the command generation processing according to the fifth embodiment. Of those, Step S310, Step S320, Step S330, Step S340, Step S350, and Step S360 are the same as those in the command generation processing according to the first embodiment in [1-2. Flow of processing]. Accordingly, there will be mainly described Step S410, Step S450, Step S460, Step S470, Step S480, and Step S490, which are newly added.

In Step S410, the operation processing section 150 determines whether one piece of semantic information out of the two types of semantic information for generating a command is recognized. Here, when the one piece of semantic information is recognized, the processing proceeds to Step S450. On the other hand, in the case where neither of the pieces of semantic information is recognized, the processing is terminated.

In Step S450, the operation processing section 150 confirms to the time-series management section 180 whether the other input information for recognizing the semantic information is present. Here, when the other input information is already present, the processing proceeds to Step S480. On the other hand, when the other input information is still not present, the processing proceeds to Step S460.

In Step S460, the operation processing section 150 specifies a candidate for unrecognized semantic information, and performs control such that the input action indicating the semantic information of the candidate is displayed on a display screen of a target device or another device.

In Step S470, when the user performs further input action within a predetermined time period, for example, the voice input information acquisition section 110 or the gesture input information acquisition section 120 acquires the voice input information or the gesture input information based on the input action.

In Step S480, the voice recognition section 130 or the gesture recognition section 140 recognizes the other semantic information based on the acquired voice input information or gesture input information.

In Step S490, the operation processing section 150 determines whether the other semantic information is recognized. Here, when the other semantic information is recognized, the processing proceeds to Step S340. On the other hand, in the case where the other semantic information is not recognized, the processing is terminated.

### <6. Hardware configuration of information processing apparatus according to each embodiment of the present disclosure>

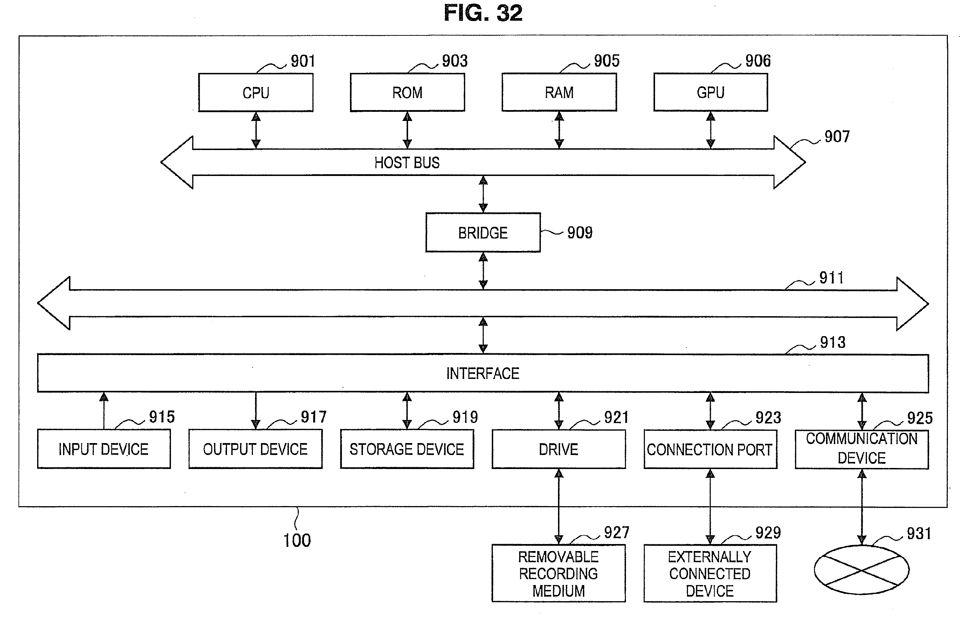

Next, with reference to FIG. 32, a hardware configuration of the information processing apparatus 100 according to each embodiment of the present disclosure will be described in detail.

FIG. 32 is a block diagram showing an example of the hardware configuration of the information processing apparatus 100 according to each embodiment of the present disclosure.

The information processing apparatus 100 mainly includes a CPU 901, a ROM 903, and a RAM 905. In addition, the information processing apparatus 100 further includes a host bus 907, a bridge 909, an external bus 911, an interface 913, an input device 915, an output device 917, a storage device 919, a drive 921, a connection port 923, and a communication device 925.

The CPU 901 functions as an arithmetic processing unit and a control unit, and controls the overall operation inside the information processing apparatus 100 or a portion thereof according to various programs or instructions recorded in the ROM 903, the RAM 905, the storage device 919, or the removable recording medium 927. The ROM 903 stores a program, an arithmetic parameter, and the like used by the CPU 901. The RAM 905 temporarily stores a program used by the CPU 901 and a parameter that appropriately changes during execution of the program. Those are connected to each other via the host bus 907 configured from an internal bus such as a CPU bus.

The host bus 907 is connected to the external bus 911 such as a PCI (Peripheral Component Interconnect/Interface) bus via the bridge 909.

The input device 915 is, for example, means for acquiring input information from the input action performed by the user, such as a microphone or a camera. Further, the input device 915 is, for example, operation means that is operated by the user, such as a mouse, a keyboard, a touch panel, a button, a switch, or a lever. Further, the input device 915 may be, for example, remote controlling means (so called remote controller) using infrared rays or other radio waves, or may be an externally connected device 929 such as a mobile phone or a PDA that supports the operation of the information processing apparatus 100. Still further, the input device 915 is configured from, for example, an input control circuit which generates an input signal based on the information input by the user using the operation means and outputs the generated input signal to the CPU 901. The user of the information processing apparatus 100 can input various types of data and can instruct the information processing apparatus 100 on the processing operation by operating the input device 915.

The output device 917 is configured from a device capable of visually or aurally notifying the user of acquired information. Examples of such device include display devices such as a CRT display device, a liquid crystal display device, a plasma display device, an EL display device and a lamp, audio output devices such as a speaker and a headphone, a printer, a mobile phone, and a facsimile machine. For example, the output device 917 outputs a result obtained by various processes performed by the information processing apparatus 100. More specifically, the display device displays, in the form of texts or images, a result obtained by various processes performed by the information processing apparatus 100. On the other hand, the audio output device converts an audio signal such as reproduced audio data and sound data into an analog signal, and outputs the analog signal.

The storage device 919 is a device for storing data configured as an example of a storage section of the information processing apparatus 100. The storage device 919 is configured from, for example, a magnetic storage device such as an HDD (Hard Disk Drive), a semiconductor storage device, an optical storage device, a magneto-optical storage device, or other such tangibly embodied non-transitory computer-readable storage media. The storage device 919 stores a program (i.e., instructions) executed by the CPU 901 for performing a variety of functions, various types of data, and sound signal data or image signal data acquired from the input device 915 or the outside.

The drive 921 is a reader/writer for the recording medium and is built in or externally attached to the information processing apparatus 100. The drive 921 reads out information recorded in the removable recording medium 927 which is mounted thereto, such as a magnetic disk, an optical disk, a magneto-optical disk, or a semiconductor memory, and outputs the information to the RAM 905. Further, the drive 921 can write in the attached removable recording medium 927 such as the magnetic disk, the optical disk, the magneto-optical disk, or the semiconductor memory. The removable recording medium 927 may be a tangibly embodied non-transitory computer-readable storage medium, such as a DVD medium, an HD-DVD medium, or a Blu-ray medium. The removable recording medium 927 may further be a CompactFlash (CF, registered trademark), a flash memory, an SD memory card (Secure Digital Memory Card), or the like. Further, the removable recording medium 927 may be, for example, an IC card (Integrated Circuit Card) equipped with a non-contact IC chip or an electronic appliance.

The connection port 923 is a port for allowing a device to directly connect to the information processing apparatus 100. Examples of the connection port 923 include a USB (Universal Serial Bus) port, an IEEE1394 port, and an SCSI (Small Computer System Interface) port. Other examples of the connection port 923 include an RS-232C port, an optical audio terminal, and an HDMI (High-Definition Multimedia Interface) port. The connection of the externally connected device 929 to this connection port 923 enables the information processing apparatus 100 to directly acquire the sound signal data and the image signal data from the externally connected device 929 and to provide the sound signal data and the image signal data to the externally connected device 929.

The communication device 925 is a communication interface configured from, for example, a communication device for establishing a connection to a communication network 931. The communication device 925 is, for example, a wired or wireless LAN (Local Area Network), Bluetooth (registered trademark), a communication card for WUSB (Wireless USB), or the like. Further, the communication device 925 may be a router for optical communication, a router for ADSL (Asymmetric Digital Subscriber Line), a modem for various communications, or the like. This communication device 925 can transmit and receive signals and the like in accordance with a predetermined protocol such as TCP/IP on the Internet and with other communication devices, for example. The communication network 931 connected to the communication device 925 is configured from a network and the like, which is connected via wire or wirelessly, and may be, for example, the Internet, a home LAN, infrared communication, radio wave communication, and satellite communication.

Heretofore, an example of the hardware configuration capable of realizing the functions of the information processing apparatus 100 according to the embodiment of the present disclosure has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present embodiment.

### <7. Summary>

Heretofore, with reference to FIGS. 1 to 32, each embodiment of the present disclosure has been described. According to the first embodiment, various effects can be obtained. First, by combining two or more types of input actions, the number of input actions that the user has to remember can be decreased. For example, in the case where the input action using a voice is combined with the input action using a motion of the hand, the user is to remember five input actions using voices and five input actions using motions of the hand, that is, 10 input actions in total, thereby making it possible to generate up to 25 commands, which is the maximum combination number. On the other hand, in the case where only input actions using motions of the hand are used, the user has to remember 25 input actions using motions of the hand in order to generate 25 commands.

Further, since the number of input patterns for each type of input action decreases by combining two or more types of input actions, the possibility of an erroneous input may be reduced, in which an input pattern that is not intended by the input action is specified, and hence, the unintended semantic information is recognized. For example, when one type of input action represents the semantic information indicating the content of the operation and another type of input action represents the target of the operation, it is easy for the user to assume the semantic information that each input action may represent, and hence, the user may more easily remember the input action.

Further, in the case where an identical piece of semantic information is associated with a plurality of input patterns, for example, since the number of input actions that the user necessarily has to remember is decreased, the burden of remembering input actions imposed on the user may be reduced.

Further, according to the second embodiment, in addition to the above-mentioned effects obtained in the first embodiment, the user not only causes the target device to simply execute the predetermined operation, but may also cause the target device to execute the predetermined operation at a desired execution amount, based on the input action. In this way, the command indicating more detailed operation instruction can be generated by the simple input action, and the target device can be operated more accurately.

Further, according to the third embodiment, in addition to the above-mentioned effects obtained in the first embodiment, each user may easily perform an input action. For example, in the case of using an input pattern that is set in advance for each user ID, or in the case of using a degree of priority that is set in advance for each user ID, since the command is generated in view of the characteristics of the user, the possibility may be reduced, that an input action which the user does not use is erroneously recognized and the unintended semantic information is recognized. Further, the possibility may be increased, that the input action which the user uses is correctly recognized and the intended semantic information is recognized.

Further, according to the fourth embodiment, in addition to the above-mentioned effects obtained in the first embodiment, the user may omit one of the input actions. In this way, the burden of the input action imposed on the user may be reduced.

Further, according to the fifth embodiment, in addition to the above-mentioned effects obtained in the first embodiment, when the user performs one of the input actions, the user may grasp the other input action for generating the command. Further, when performing one of the input actions, the user may grasp the state of the target of operation before the operation is executed in accordance with the command. Accordingly, since the user can obtain reference information for the next input action, the convenience for the user may be enhanced.

Note that, in the first to fifth embodiments, the operations of respective sections are related to each other, and, considering the relation with each other, replacement can be performed in terms of a series of operations and a series of processes. In this regard, the embodiments of the information processing apparatus may be used as an embodiment of a command generation method performed by the information processing apparatus and as an embodiment of a program for causing a computer to realize the functions of the information processing apparatus.

It will be understood by those skilled in the art that various modifications, combinations, sub-combinations and alterations may occur depending on design requirements and other factors insofar as they are within the scope of the appended claims or the equivalents thereof. Also, any reference in the claims to articles, such as "a" or "an," is to be construed as meaning "one or more."

As a further example, although in each embodiment there has been described the example of using the input pattern obtained by modeling the input action in advance in order to recognize the semantic information from the input information, the present disclosure is not limited to such an example. The information processing apparatus may directly recognize the semantic information from the input information, or may recognize the semantic information from the input information via another kind of information.

Further, although in each embodiment, there has been described the example in which the pieces of information such as the input pattern, the semantic information, and the command are stored in the information processing apparatus, the present disclosure is not limited to such an example. Each piece of information may be stored in another device connected to the information processing apparatus, and the information processing apparatus may appropriately acquire each piece of information from the other device.

Still further, although in each embodiment, there have been used the input action using a voice and the input action using a motion or a state of a part of or entire body as two or more types of input actions, the present disclosure is not limited to such an example. There may be used three or more types of input actions, not two types of input actions. Further, there may also be used input actions using a remote controller, a mouse, a keyboard, a touch panel, and the like, not the voice or the motion or the state of a part of or entire body.

In addition, although each embodiment has been described separately for easier comprehension, the present disclosure is not limited to such an example. Each embodiment may be appropriately combined with another embodiment. For example, the second embodiment and the third embodiment may be combined with each other, and the information processing apparatus may have both the change amount conversion section and the individual distinguishing section. In this case, for example, the change amount storage section may store the change amount conversion dictionary for each user, and the change amount conversion section may recognize the execution amount information indicating the execution amount of the operation in accordance with the specified user ID.

It is to be appreciated that various sections described in connection with information processing apparatus 100 may be embodied in different remote devices or servers in a cloud computing configuration. For example, voice storage section 132 and/or gesture storage section 142 may store input patterns remotely from information processing apparatus 100, and provide information responsive to a remote request for input patterns from information processing apparatus 100.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

### CLAUSES

Various embodiments of the present invention are described in the following numbered clauses:
1. The apparatus of claim 1, comprising an executing unit which executes the generated command to perform the predetermined operation.
2. The apparatus of claim 1, wherein one of the first input or second input specifies execution amount information for the predetermined operation.
3. The apparatus of claim 1, wherein the semantic information comprises information indicating a meaning of a received input.
4. The apparatus of claim 1, wherein the processing unit generates a single command to perform the predetermined operation.

## Claims

1. An apparatus comprising:
an acquisition unit which acquires a first input and a second input from among a plurality of inputs;
a recognition unit which:
determines first semantic information associated with the first input; and
determines second semantic information associated with the second input; and
a processing unit which generates a command to perform a predetermined operation, based a combination of the determined first and second semantic information.

2. The apparatus of claim 1, comprising a voice recognition unit which recognizes a voice input as the first input.

3. The apparatus of claim 1, comprising a gesture recognition unit which recognizes a gesture input as the first input.

4. The apparatus of claim 1, wherein the first input and second input are received simultaneously.

5. The apparatus of claim 1, wherein one of the first input or second input specifies a target for the predetermined operation.

6. The apparatus of claim 1, comprising a storage unit for storing input patterns for comparison with the first input or the second input.

7. The apparatus of claim 8, wherein the storage unit comprises a voice storage unit for storing voice input patterns.

8. The apparatus of claim 9, wherein the processing unit determines the first semantic information by comparing the first input to the voice input patterns.

9. The apparatus of claim 8, wherein the storage unit comprises a gesture storage unit for storing gesture input patterns.

10. The apparatus of claim 11, wherein the processing unit determines the first semantic information by comparing the first input to the gesture input patterns.

11. The apparatus of claim 1, comprising a user identification unit for identifying a user based on the first input or the second input.

12. The apparatus of claim 13, wherein the recognition unit determines first semantic information and second semantic information associated with the identified user.

13. The apparatus of claim 1, comprising a frequency information unit which stores a generation frequency representing the number of times the generated command has been generated within a predetermined period of time.

14. A method comprising:
acquiring at least a first input and a second input from among a plurality of inputs;
determining first semantic information associated with the first input;
determining second semantic information associated with the second input; and
generating a command to perform a predetermined operation, based a combination of the determined first and second semantic information.

15. A tangibly embodied non-transitory computer-readable storage device storing instructions which, when executed by a processor, cause a computer to perform a method for displaying a plurality of objects, comprising:
acquiring at least a first input and a second input from among a plurality of inputs;
determining first semantic information associated with the first input;
determining second semantic information associated with the second input; and
generating a command to perform a predetermined operation, based a combination of the determined first and second semantic information.
